# EUROPÄISCHE PATENTSCHRIFT

(11) **EP 3 711 871 B1**
(45) Veröffentlichungstag und Bekanntmachung des Hinweises auf die Patenterteilung: **21.02.2024**
(21) Anmeldenummer: 20162864.1
(22) Anmeldetag: 13.03.2020
(51) Int. Cl.: B08B 3/02, B08B 13/00, D06F 95/00, D06F 34/18, A62B 29/00, B60P 3/00

(54) **WECHSELBEHÄLTER UND WECHSELLADERFAHRZEUG MIT WECHSELBEHÄLTER**
INTERCHANGEABLE CONTAINER AND SWAP LOADER VEHICLE WITH INTERCHANGEABLE CONTAINER
RÉCIPIENT INTERCHANGEABLE ET VÉHICULE PORTE-BERCE POURVU DE RÉCIPIENT INTERCHANGEABLE

(30) Priorität: 21.03.2019 DE 102019001965
(43) Veröffentlichungstag der Anmeldung: 23.09.2020
(73) Patentinhaber: Dräger Safety AG & Co. KGaA, 23560 Lübeck (DE)
(72) Erfinder: Bereths, Alexander, 23562 Lübeck (DE)
(74) Vertreter: Meyer-Gramann, Klaus Dieter

(56) Entgegenhaltungen:
- WO-A1-2014/084466
- DE-A1- 10 345 351
- DE-A1-102016 213 232
- US-A- 4 858 256
- US-A1- 2007 163 093

## Beschreibung

Die Erfindung betrifft eine Reinigungseinrichtung und ein Verfahren zum Reinigen mindestens eines Schutzbekleidungsstücks sowie einen transportierbaren Behälter mit einer solchen Reinigungseinrichtung.

Wenn eine Einsatzkraft, beispielsweise ein Feuerwehrmann, sich in einem für Menschen gefährlichen Bereich aufhält, so trägt die Einsatzkraft eine geeignete Schutzbekleidung mit mehreren Schutzbekleidungsstücken, insbesondere Helm, Jacke, Hose und Schuhe. Während des Einsatzes können diese Schutzbekleidungsstücke Schadstoffe aufnehmen, insbesondere Cyanwasserstoff (HCN) und Kohlenmonoxid (CO), und sind dann kontaminiert. Um eine Gesundheitsbelastung einer Einsatzkraft zu vermeiden, müssen die Schutzbekleidungsstücke gereinigt und dadurch dekontaminiert werden, bevor sie erneut verwendet werden.

Unterschiedliche Reinigungseinrichtungen für Schutzbekleidungsstücke sind bekannt geworden.

US 4,858,256 zeigt einen Fahrzeug (truck 10) mit einem Behälter (body 12). Der Behälter 12 lässt sich auf eine Ladefläche des Fahrzeugs 10 laden und zu einem Einsatzort fahren, an dem gefährliche Schadstoffe ausgetreten sind. Der Behälter 12 umfasst einen Auskleidebereich (personal treatment compartment 18) mit Trommeln (drums 32 und 34), welche kontaminierte Schutzbekleidungsstücke aufzunehmen vermögen, einen Duschbereich mit einer Duschkabine (shower room or stall 36) und einen quaderförmigen Reinigungsbereich für Schutzbekleidung (decontamination compartment 24) mit Reinigungskabinen (shelves 56, nozzles 58, blower 37).

In DE 10345351 A1 wird ein Dekontaminationssystem 10 mit drei Containern 12, 14, 16 beschrieben, die miteinander zu einem Gesamtcontainer 18 verbunden sind. Der Gesamtcontainer 18 ist auf einem Transportfahrzeug 22 befestigt. In einem Dekontaminationsmodul 16 sind ein Aus- und Ankleidezelt 54 und eine Duschsektion 52 angeordnet. In dem Container 12 sind Einrichtungen zur Dekontamination von Großgeräten untergebracht, insbesondere ein Hochdruckreinigungsmodul, ein Hochdruckdekontaminationsmodul, ein Applikationsmodul für nicht wässrige Dekontaminationsmittel und weiteres Zubehör zur Dekontamination. In dem Container 14 sind Einrichtungen zum Dekontaminieren von kleineren Geräten, insbesondere von persönlichen Ausrüstungsgegenständen, und zur Dekontamination von Bekleidung vorgesehen.

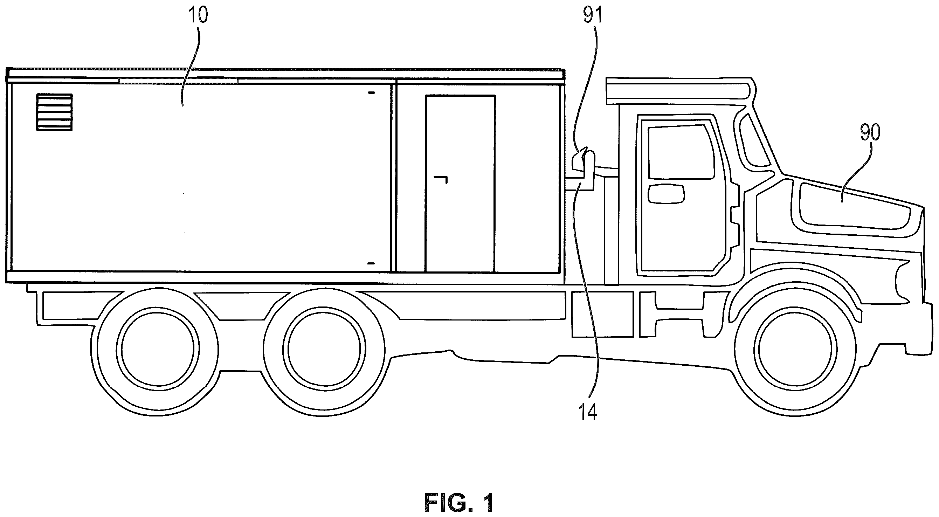

US 6,390,110 B1 zeigt ein collective protection system 10, welches von luftdichten Planen gebildet wird und die Form eine Abfolge von Zelten aufweist. Dieses System 10 umfasst eine Contamination Control Area (CCA) 12, eine Toxic Free Area (TFA) 14, ein airlock 13 zwischen den Bereichen 12 und 14, einen Generator 15 und eine NBC filter and fan unit 16, vgl. Figur 1.

Aus DE 20 2006 012 559 U1 ist ein Aufbau eines Abrollbehälters für ein Feuerwehrfahrzeug bekannt.

In DE 20 2004 004 959 U1 wird eine mobile Zivilschutzeinheit mit einem containerartigen Behälter zur Aufnahme von Einrichtungen zur Kampfstoff- und/oder Gefahrstoff-Dekontamination von Personen und Geräten beschrieben, wobei eine Dusche vorgesehen ist. In dem Behälter sind zusätzlich Einrichtungen zur Kampf- und/oder Gefahrstoffidentifikation vorgesehen.

US 2007/0163093 A1 beschreibt eine Vorrichtung und ein Verfahren, um Kleidungsstücke (fabric load 22) zu reinigen. Eine Kammer (revitalization chamber 26) in einem Gehäuse (20) vermag ein Kleidungsstück 22 aufzunehmen. Eine Reinigungseinheit (delivery means 120) vermag Feuchtigkeitstropfen, Schaum, Hitze, Dampf, Fluid und Chemikalien in die Kammer 26 abzugeben oder auch die Kammer 26 zu vibrieren. Sensoren vermögen unterschiedliche physikalische und chemische Eigenschaften in der Kammer 26 zu entdecken, u.a. das Vorhandensein von CO.

In DE 102016213232 A1 wird eine Waschmaschine mit mindestens einem mikromechanischen Sensor beschrieben. Beispielhaft werden ein Beschleunigungssensor 34, ein Drucksensor 35 sowie ein optischer Sensor genannt, mit denen sich die Menge des Behandlungsmittels sowie eine Verschmutzungsart oder eine Verschmutzungsmenge eines Wäschestücks detektieren lassen.

Der Erfindung liegt die Aufgabe zugrunde, eine Reinigungseinrichtung und ein Verfahren zum Reinigen von mindestens einem Schutzbekleidungsstück bereitzustellen, welche zuverlässiger als bekannte Reinigungseinrichtungen und Verfahren mindestens ein Schutzbekleidungsstück zu dekontaminieren vermögen.

Die Aufgabe wird durch eine Reinigungseinrichtung mit den Merkmalen des Anspruchs 1 und durch ein Verfahren mit den Merkmalen des Anspruchs 14 gelöst. Vorteilhafte Ausgestaltungen sind in den Unteransprüchen angegeben. Vorteilhafte Ausgestaltungen der erfindungsgemäßen Reinigungseinrichtung sind auch vorteilhafte Ausgestaltungen des erfindungsgemäßen Verfahrens und umgekehrt.

Durch die erfindungsgemäße Reinigungseinrichtung und das erfindungsgemäße Verfahren lässt sich mindestens ein Schutzbekleidungsstück reinigen, bevorzugt gleichzeitig mehrere Schutzbekleidungsstücke.

Ein Schutzbekleidungsstück lässt sich von einem Menschen an seinem Körper tragen und trägt - in der Regel zusammen mit anderen Schutzbekleidungsstücken - dazu bei, den Menschen vor chemischen oder mechanischen oder thermischen oder sonstigen gefährlichen Umgebungseinflüssen zu schützen. Durch die Reinigung soll eine Kontaminierung des Schutzbekleidungsstücks beseitigt werden, also das Schutzbekleidungsstück dekontaminiert werden.

Die erfindungsgemäße Reinigungseinrichtung umfasst
- mindestens eine Reinigungskabine,
- mindestens eine Reinigungseinheit,
- mindestens einen Schadstoffsensor und
- ein datenverarbeitendes Steuergerät.

Die oder jede Reinigungskabine der Reinigungseinheit vermag mindestens ein zu dekontaminierendes Schutzbekleidungsstück aufzunehmen, bevorzugt gleichzeitig mehrere zu dekontaminierende Schutzbekleidungsstücke.

Die oder jede Reinigungseinheit ist der oder jeweils einer Reinigungskabine zugeordnet, wenigstens teilweise in dieser zugeordneten Reinigungskabine angeordnet und vermag jeweils mindestens einen Reinigungsvorgang durchzuführen. Dieser Reinigungsvorgang ist dafür geeignet, mindestens ein Schutzbekleidungsstück, welches in der zugeordneten Reinigungskabine aufgenommen ist, zu dekontaminieren.

Der oder jeder Schadstoffsensor ist der oder jeweils einer Reinigungskabine zugeordnet, wenigstens teilweise in der Reinigungskabine angeordnet und vermag jeweils mindestens einen Schadstoff zu detektieren, wobei dieser Schadstoff von einem in der zugeordneten Reinigungskabine aufgenommenen Schutzbekleidungsstück aufgenommen worden sein kann und / oder von diesem Schutzbekleidungsstück abgegeben werden kann.

Das Steuergerät vermag einen Reinigungsvorgang durch die oder eine Reinigungseinheit auszulösen oder vermag zu entscheiden, keinen Reinigungsvorgang in der oder einer Reinigungskabine auszulösen. Dieses Auslösen des Reinigungsvorgangs oder diese Entscheidung trifft das Steuergerät automatisch und in Abhängigkeit von mindestens einem Signal, welches der oder mindestens ein Schadstoffsensor erzeugt hat. Falls das Steuergerät entschieden hat, keinen oder keinen weiteren Reinigungsvorgang auszulösen, so gibt es bevorzugt eine entsprechende Meldung aus. Das Steuergerät vermag einen initialen Reinigungsvorgang auszulösen. Außerdem vermag das Steuergerät einen weiteren Reinigungsvorgang auszulösen oder zu entscheiden, keinen weiteren Reinigungsvorgang auszulösen. Diese Entscheidung vermag das Steuergerät abhängig von einem initialen Signal des oder eines Schadstoffsensors zu treffen. Dieses initiale Signal ist nach dem initialen Reinigungsvorgang erzeugt worden.

Die erfindungsgemäße Reinigungseinrichtung ist dazu ausgestaltet, die folgenden Schritte durchzuführen:
- Die Reinigungseinheit führt einen initialen Reinigungsvorgang zur Dekontaminierung des oder jedes Schutzbekleidungsstücks durch.
- Nach dem initialen Reinigungsvorgang nimmt der Schadstoffsensor eine Messung auf mindestens einen Schadstoff an dem oder mindestens einem Schutzbekleidungsstück vor, während das Schutzbekleidungsstück sich in der Rettungskabine befindet.
- Dann, wenn das oder mindestens ein Schutzbekleidungsstück in der Reinigungskabine noch kontaminiert ist, führt die Reinigungseinheit einen weiteren Reinigungsvorgang zur Dekontaminierung des oder mindestens eines Schutzbekleidungsstücks durch.

Das erfindungsgemäße Verfahren wird unter Verwendung einer solchen Reinigungseinrichtung durchgeführt und umfasst die folgenden Schritte:
- Das oder jedes Schutzbekleidungsstück einer Menge von gleichzeitig zu reinigenden Schutzbekleidungsstücken wird in die oder eine Reinigungskabine verbracht.
- Das Steuergerät löst automatisch einen initialen Reinigungsvorgang aus.
- Die zugeordnete Reinigungseinheit führt den initialen Reinigungsvorgang in dieser Reinigungskabine durch. Dieser initiale Reinigungsvorgang hat das Ziel, das oder jedes Schutzbekleidungsstück in der zugeordneten Reinigungskabine zu dekontaminieren.
- Der oder mindestens ein Schadstoffsensor in der Reinigungskabine nimmt eine Messung auf jeweils mindestens einen Schadstoff an dem oder mindestens einem Schutzbekleidungsstück in der Reinigungskabine vor. Diese Messung führt der Schadstoffsensor nach dem initialen Reinigungsvorgang durch.
- Das Steuergerät entscheidet automatisch, ob das oder mindestens ein Schutzbekleidungsstück in der Reinigungskabine noch kontaminiert ist oder nicht. Diese Entscheidung trifft das Steuergerät abhängig von einem Ergebnis der oder einer Messung durch den oder mindestens einen Schadstoffsensor.
- Dann, wenn das oder mindestens ein Schutzbekleidungsstück in der Reinigungskabine noch kontaminiert ist, so löst das Steuergerät einen weiteren Reinigungsvorgang aus. Die zugeordnete Reinigungseinheit führt den weiteren Reinigungsvorgang durch, der ebenfalls das Ziel hat, das oder mindestens ein oder bevorzugt jedes Schutzbekleidungsstück in der Reinigungskabine zu dekontaminieren.
- Bevorzugt wird dann, wenn kein Schutzbekleidungsstück in der Reinigungskabine kontaminiert ist, eine entsprechende Meldung ausgegeben. Dies gilt, wenn von Anfang an kein Schutzbekleidungsstück dekontaminiert war oder wenn nach mindestens einen Reinigungsvorgang keines mehr dekontaminiert ist.

Die Entscheidung, keinen Reinigungsvorgang auszulösen, wird insbesondere dann automatisch getroffen, wenn die Schutzbekleidungsstücke in der Reinigungsgewinne nicht oder nicht mehr kontaminiert sind oder wenn zwar mindestens ein Schutzbekleidungsstück noch kontaminiert ist, aber ein vorgegebenes Abbruchkriterium zum Abbrechen der Reinigung erfüllt ist.

Die Erfindung erzielt allem die folgenden Vorteile:
Weil ein Schutzbekleidungsstück nach dem Einsatz gereinigt wird, bevorzugt noch am Einsatzort, steht es rasch wieder zur Verfügung, ohne einen Menschen zu gefährden.

Die oder jede Reinigungskabine schirmt die aufgenommenen und zu dekontaminierenden Schutzbekleidungsstücke und die Reinigungseinheit vor der Umgebung ab und reduziert die Gefahr, dass ein Mensch außerhalb der Reinigungskabine durch Schadstoffe oder den Reinigungsvorgang gefährdet wird.

Die Erfindung reduziert dank des Schadstoffsensors die Gefahr, dass ein Schutzbekleidungsstück nach einem Einsatz fälschlich für ein erfolgreich dekontaminiertes Schutzbekleidungsstück gehalten wird, obwohl es noch kontaminiert ist und daher eine Gefährdung für einen Menschen darstellt. Ermöglicht wird, dass sichergestellt wird, dass ein Schutzbekleidungsstück nur dann als dekontaminiert eingestuft und weiterverwendet wird, wenn der oder jeder Schadstoffsensor der zugeordneten Reinigungskabine die Freiheit von Schadstoffen detektiert hat.

Weiterhin wird ermöglicht, dass ein Schutzbekleidungsstück, welches trotz mindestens eines Reinigungsvorgangs noch kontaminiert ist und von der Reinigungseinrichtung nicht dekontaminiert werden kann, von einem Menschen aus der Reinigungskabine genommen wird, welcher bei diesem Vorgang geeignete Schutzbekleidung trägt. Die Erfindung vermag sicherzustellen, dass der Mensch bei der Entnahme Schutzbekleidung trägt, wenn dies erforderlich ist (ein zu entnehmendes Schutzbekleidungsstück ist noch dekontaminiert) und ansonsten keine Schutzbekleidung zu tragen braucht.

Weil das Steuergerät einen Reinigungsvorgang abhängig von einem Signal des Schadstoffsensors auslöst, ist es nicht erforderlich, dass ein Mensch ein Messergebnis des Schadstoffsensors auswertet oder gar selber eine Schadstoffmessung mit einem mobilen Sensor vornimmt.

Ausgestaltungen der erfindungsgemäßen Reinigungseinrichtung sind auch mögliche Ausgestaltungen des erfindungsgemäßen Reinigungsverfahrens und umgekehrt.

Bevorzugt löst das Steuergerät den oder jeden Reinigungsvorgang aus und beendet ihn auch automatisch. Bei diesem Auslösen und Beenden steuert das Steuergerät bevorzugt das oder jedes Reinigungsgerät in der Reinigungskabine an und aktiviert es und deaktiviert es später wieder. Zu den Reinigungsgeräten in einer Reinigungskabine können insbesondere Düsen, die eine Reinigungsflüssigkeit ausstoßen, sowie Heißluftgebläse zum Trocken von Schutzbekleidungsstücken gehören. Dank der Ausgestaltung, dass das Steuergerät jeden Reinigungsvorgang auslöst und wieder beendet, ist es möglich, aber nicht erforderlich, dass ein Mensch einen Reinigungsvorgang auslöst, überwacht oder beendet. Insbesondere deshalb können die Vorgänge, dass nach einem Einsatz Schutzbekleidungsstücke gereinigt werden und dass ein Mensch, der am Einsatz beteiligt war, sich selbst reinigt, zeitlich überlappend durchgeführt werden.

Erfindungsgemäß ist in der oder jeder Reinigungskabine jeweils eine Reinigungseinheit angeordnet, welche das oder jedes Schutzbekleidungsstück in der Reinigungskabine zu reinigen vermag. Bevorzugt umfasst die Reinigungseinheit mindestens eine Waschdüse, welche eine Reinigungsflüssigkeit ausgestoßen vermag, bevorzugt mehrere Waschdüsen, welche die Reinigungsflüssigkeit in verschiedenen Richtungen auszustoßen vermögen. Beispielsweise ist mindestens eine Waschdüse an dem oder nahe dem Boden der Reinigungskabine angeordnet und stößt die Reinigungsflüssigkeit senkrecht oder schräg nach oben aus. Mindestens eine weitere Waschdüse ist nahe der Decke der Reinigungskabine angeordnet und stößt die Reinigungsflüssigkeit senkrecht oder schräg nach unten aus. Optional ist mindestens eine weitere Waschdüse an einer Wand der Reinigungskabine angeordnet und stößt Reinigungsflüssigkeit waagrecht oder schräg nach oben oder nach unten aus. Dank dieser Ausgestaltung wird ein Schutzbekleidungsstück von mehreren Seiten von Reinigungsflüssigkeit erfasst und dadurch gereinigt. Dies führt zu einer gründlicheren Reinigung. Zeit lässt sich einsparen.

Bevorzugt umfasst die Reinigungseinheit weiterhin mindestens ein Heißluftgebläse, welches das oder ein Schutzbekleidungsstück nach der eigentlichen Reinigung trocknet. Dadurch steht das Schutzbekleidungsstück rascher wieder für einen neuen Einsatz zur Verfügung, als wenn das Schutzbekleidungsstück lediglich an der Luft trocknen würde. Nicht erforderlich ist es, ein feuchtes oder gar nasses und dadurch schweres Schutzbekleidungsstück aus der Reinigungskabine zu tragen.

Bevorzugt umfasst die oder jede Reinigungskabine jeweils eine Verriegelungseinheit, welche die Reinigungskabine zu verriegeln vermag. Bevorzugt aktiviert das Steuergerät die Verriegelungseinheit und verriegelt dadurch die Reinigungskabine, bevor das Steuergerät einen Reinigungsvorgang auslöst. Das Steuergerät deaktiviert die Verriegelungseinheit erst dann wieder und entriegelt erst dann die Reinigungskabine wieder, wenn der oder der letzte Reinigungsvorgang abgeschlossen ist und die Schutzbekleidungsstücke aus der Reinigungskabine entnommen werden sollen. Dadurch wird ausgeschlossen, dass ein Mensch oder ein sonstiges Lebewesen die Reinigungskabine betritt, während ein Reinigungsvorgang durchgeführt wird, oder dass die Reinigung sich verzögert, weil vergessen wurde, die Reinigungskabine manuell zu verriegeln.

Bevorzugt ist in der oder jeder Reinigungskabine jeweils mindestens eine Halterung für ein Schutzbekleidungsstück angeordnet. Diese Halterung trägt das Schutzbekleidungsstück, beispielsweise nach Art eines Kleiderbügels oder eines Hosenspanners oder eines Schuhspanners, sodass Reinigungsflüssigkeit jeden Bereich des Schutzbekleidungsstücks erreichen kann. Jede Halterung für ein Schutzbekleidungsstück kann Abmessungen aufweisen, die den entsprechenden Abmessungen eines Körperteils eines Menschen ähneln, der das Schutzbekleidungsstück an diesem Körperteil trägt.

In einer Ausgestaltung vermag das Steuergerät einen initialen Reinigungsvorgang und bei Bedarf (gemäß einer Messung durch einen Schadstoffsensor ist mindestens ein Schutzbekleidungsstück noch kontaminiert) einen weiteren Reinigungsvorgang auszulösen. Nach dem weiteren Reinigungsvorgang vermag das Steuergerät automatisch zu entscheiden, ob ein Schutzbekleidungsstück in der Reinigungskabine nunmehr immer noch dekontaminiert ist oder nicht. Hierfür verwendet das Steuergerät ein initiales Signal von dem oder einem Schadstoffsensor, welches aufgrund einer Messung nach dem initialen und vor dem weiteren Reinigungsvorgang erzeugt worden ist, sowie ein weiteres Signal, welches nach dem weiteren Reinigungsvorgang erzeugt worden ist. Ein automatisch durchgeführter Vergleich dieser beiden Signale zeigt, welche Ergebnisse die beiden Reinigungsvorgänge jeweils erbracht haben. Das Steuergerät entscheidet automatisch, ob ein dritter Reinigungsvorgang durchgeführt wird oder ob das Schutzbekleidungsstück als ein in dieser Reinigungskabine nicht zu reinigendes Schutzbekleidungsstück eingestuft wird.

In einer Ausgestaltung wird auf jeden Fall ein initialer Reinigungsvorgang für das oder jedes Schutzbekleidungsstück, welches sich in der oder einer Reinigungskabine der Reinigungseinrichtung befindet, durchgeführt. In einer bevorzugten Ausgestaltung wird hingegen zunächst automatisch entschieden, ob überhaupt eine Reinigung erforderlich ist. Für diese Entscheidung verwendet das Steuergerät ein Signal von dem oder einem Schadstoffsensor, wobei dieses Signal auf einer Messung beruht, welche vor einem Reinigungsvorgang durchgeführt wurde. Nur dann, wenn eine Dekontaminierung erforderlich ist, wird ein Reinigungsvorgang ausgelöst und durchgeführt. Falls keine Dekontaminierung erforderlich ist, weil kein Schutzbekleidungsstück in der Reinigungskabine kontaminiert ist, wird bevorzugt eine entsprechende Meldung ausgegeben. Diese Ausgestaltung spart Zeit und Reinigungsmittel und Energie für unnütze Reinigungsvorgänge ein.

In einer Ausgestaltung ist der oder jeder Schadstoffsensor fest an der oder jeweils einer Reinigungskabine befestigt. In einer anderen Ausgestaltung umfasst die Reinigungseinrichtung mindestens ein Stellglied für den oder mindestens einen Schadstoffsensor. Dieses Stellglied vermag den Schadstoffsensor relativ zu der Oberfläche eines Schutzbekleidungsstücks in der zugeordneten Reinigungskabine zu bewegen. Dank dieser Ausgestaltung lässt sich der Schadstoffsensor ausreichend dicht zu verschiedenen Bereichen eines Schutzbekleidungsstücks bringen und vermag dann jeweils eine Messung durchzuführen. Dadurch wird ein Schadstoff auch dann detektiert, wenn nur ein Bereich eines Schutzbekleidungsstücks oder auch nur ein Schutzbekleidungsstück in der Reinigungskabine kontaminiert ist, aber nicht das gesamte Schutzbekleidungsstück. Dank dieser Ausgestaltung lässt sich der Schadstoffsensor außerdem nach einer Messung und vor einem Reinigungsvorgang von den zu reinigenden Schutzbekleidungsstücken weg bewegen und ist dadurch besser vor Beschädigungen geschützt.

In einer Ausgestaltung bewegt das Stellglied den Schadstoffsensor aus einer Parkposition in die oder eine Messposition und später wieder zurück in die Parkposition. In der Parkposition ist der Schadstoffsensor vor Beschädigungen besser geschützt, insbesondere vor Reinigungsflüssigkeit, beispielsweise weil der Schadstoffsensor in der Parkposition von einem Gehäuse aufgenommen ist. In der Messposition befindet der Schadstoffsensor sich ausreichend nahe an dem oder einem Schutzbekleidungsstück, um das Vorhandensein von Schadstoffen zu prüfen. Bevorzugt befindet der Schadstoffsensor sich während eines Reinigungsvorgangs in der Parkposition.

Zu den gasförmigen Schadstoffen, die bei einem Brand gebildet werden können und daher Schutzbekleidungsstücke kontaminieren können, gehören vor allem Cyanwasserstoff (HCN) und Kohlenmonoxid (CO). In einer Ausgestaltung vermag der oder ein Schadstoffsensor Cyanwasserstoff zu detektieren. In einer anderen Ausgestaltung vermag der oder ein Schadstoffsensor Kohlenmonoxid zu detektieren. Diese beiden Ausgestaltungen lassen sich kombinieren, z.B. wie folgt: Bevorzugt umfasst die Reinigungseinrichtung jeweils einen Cyanwasserstoff-Sensor und jeweils einen Kohlenmonoxid-Sensor für jede Reinigungskabine, sodass in jeder Reinigungskabine sowohl Cyanwasserstoff als auch Kohlenmonoxid detektiert werden können.

Eine Auswerteeinheit empfängt die Messwerte von dem oder jedem Schadstoffsensor, verarbeitet die empfangenen Messwerte und erzeugt abhängig von den empfangenen Messwerten Signale. Beispielsweise vergleicht die Auswerteeinheit Messwerte oder einen zeitlichen Verlauf mit einem vorgegebenen Schwellenwert. Das Steuergerät empfängt und verarbeitet diese Signale. Die Auswerteeinheit kann ein Bestandteil des Steuergeräts sein oder räumlich vom Steuergerät getrennt sein. Bevorzugt befinden sich die Auswerteeinheit und das Steuergerät außerhalb der oder jeder Reinigungskabine, um die Gefahr zu reduzieren, dass die Auswerteeinheit oder das Steuergerät bei einem Reinigungsvorgang beschädigt werden, beispielsweise durch eine Reinigungsflüssigkeit oder durch heiße Luft.

In einer Ausgestaltung empfängt das Steuergerät Statusmeldungen von der oder mindestens einer Reinigungseinheit, beispielsweise Fehlermeldungen oder eine Meldung über fehlende Betriebsstoffe.

Bevorzugt vermag das Steuergerät eine Ausgabeeinheit anzusteuern, welche Meldungen in einer von einem Menschen wahrnehmbaren Form auszugeben vermag. Dadurch vermag das Steuergerät insbesondere eine Meldung auszugeben, dass die Reinigung erfolgreich beendet oder aber gar nicht notwendig ist und daher jedes Schutzbekleidungsstück dekontaminiert ist, daher keine Gefährdung für die Gesundheit mehr darstellt und aus der Reinigungskabine entnommen werden kann. Alternativ vermag das Steuergerät die Meldung auszugeben, dass mindestens ein Schutzbekleidungsstück noch kontaminiert ist und aus der Reinigungskabine entnommen werden muss und dass bei der Entnahme des Schutzbekleidungsstücks geeignete Schutzbekleidung getragen werden muss. Die Ausgabeeinheit befindet sich bevorzugt außerhalb der oder jeder Reinigungskabine, um einen Menschen zu warnen, bevor dieser die Reinigungskabine betritt. Außerdem vermag die angesteuerte Ausgabeeinheit in einer Ausgestaltung Statusmeldungen einer Reinigungseinheit auszugeben, z.B. über einen fehlenden Betriebsstoff.

Ein Reinigungsvorgang hängt in der Regel von mindestens einem Betriebsparameter ab, bevorzugt von mehreren Betriebsparametern, beispielsweise
- von der Zeitspanne des eigentlichen Reinigungsvorgangs, insbesondere wie lange Reinigungsflüssigkeit ausgestoßen wird, oder eines Trocknungsvorgangs,
- von einer Zusammensetzung oder Konzentration eines verwendeten Reinigungsmittels oder auch
- von der Temperatur oder des Drucks eine Reinigungsflüssigkeit oder
- von der Temperatur eines zum Trocknen verwendeten heißen Gases.

Möglich ist, dass unterschiedliche Bestandteile der Reinigungseinheit mit verschiedenen Werten der Betriebsparameter betrieben werden.

In einer Ausgestaltung wird jeder Reinigungsvorgang mit den gleichen vorgegebenen Werten für die Betriebsparameter durchgeführt. In einer anderen Ausgestaltung legt das Steuergerät vor einem Reinigungsvorgang automatisch für mindestens einen Betriebsparameter einen Wert fest. Für diese Festlegung verwendet das Steuergerät mindestens ein Signal von dem oder einem Schadstoffsensor und optional zusätzlich ein Signal von einem Sensor, der eine Umgebungsbedingung misst, beispielsweise eine Umgebungstemperatur oder eine Luftfeuchte oder ein Luftdruck in der Umgebung.

In einer Ausgestaltung umfasst die Reinigungseinrichtung mindestens eine Vertikal-Belüftungsvorrichtung, bevorzugt jeweils mindestens eine Vertikal-Belüftungsvorrichtung in jeder Reinigungskabine. Die oder jede Vertikal-Belüftungsvorrichtung vermag ein Gas in eine Richtung vertikal oder schräg nach unten zu bewegen. Beispielsweise stößt die Vertikal-Belüftungsvorrichtung Frischgas in die Reinigungskabine aus oder saugt Gas aus der Reinigungskabine ab. Bevorzugt wird das Gas von einem Deckenbereich der Reinigungskabine oder von einem Bereich in Höhe eines stehenden Menschen zu einem Bodenbereich der Reinigungskabine bewegt. Durch diese Vertikal-Belüftungsvorrichtung werden gasförmige Schadstoffe, die sich in der Höhe eines stehenden Menschen in der Reinigungseinrichtung befinden, nach unten bewegt. Diese Ausgestaltung reduziert die Gefahr, dass ein Mensch in der Reinigungseinrichtung gesundheitlich beeinträchtigt wird, insbesondere ein Mensch, der ein Schutzbekleidungsstück in die oder eine Reinigungskabine verbringt oder aus dieser entnimmt.

In einer Ausgestaltung umfasst die Reinigungseinrichtung eine Verpackungseinheit. Diese Verpackungseinheit ermöglicht es, ein Schutzbekleidungsstück gasdicht zu verpacken. Dadurch wird es ermöglicht, ein Schutzbekleidungsstück abzutransportieren, welches nicht dekontaminiert werden konnte und welches das Steuergerät als noch kontaminiert erkannt hat, ohne dass das noch kontaminierte Schutzbekleidungsstück Menschen gefährdet.

In einer Ausgestaltung wird ein Abbruchkriterium vorgegeben. Mindestens ein Schutzbekleidungsstück wird in die oder Reinigungskabine verbracht, und ein initialer Reinigungsvorgang wird durchgeführt - optional nur dann, wenn zuvor festgestellt wurde, dass das oder mindestens ein Schutzbekleidungsstück in der Reinigungskabine tatsächlich kontaminiert ist. Falls nach dem initialen Reinigungsvorgang mindestens ein Schutzbekleidungsstück noch kontaminiert ist, so wird mindestens ein weiterer Reinigungsvorgang durchgeführt, bevorzugt werden wiederholt weitere Reinigungsvorgänge durchgeführt, bis alle Schutzbekleidungsstücke gereinigt und dadurch dekontaminiert sind oder bis das Abbruchkriterium erfüllt ist. Das Abbruchkriterium ist beispielsweise dann erfüllt, wenn
- eine vorgegebene maximale Anzahl von Reinigungsvorgängen durchgeführt ist,
- eine vorgegebene Zeitspanne verstrichen ist und / oder
- die Schadstoffbelastung der Schutzbekleidungsstücke in der Reinigungskabine durch den zuletzt durchgeführten Reinigungsvorgang nicht signifikant, d.h. überhaupt nicht oder nicht um mehr als einen absoluten oder relativen Betrag oberhalb einer vorgegebenen Schranke, reduziert werden konnte.

In einer Ausgestaltung gehört die Reinigungseinrichtung zu einem transportierbaren Behälter. "Transportierbar" bedeutet in diesem Zusammenhang, dass der Behälter sich mithilfe eines Fahrzeugs zu einem Einsatzort transportieren lässt. Dieses Fahrzeug kann ein Lastkraftwagen oder ein sonstiges Landfahrzeug, ein Luftfahrzeug, ein Schienenfahrzeug oder ein Wasserfahrzeug sein. Der Behälter wird beispielsweise mithilfe einer Winde des Fahrzeugs oder mithilfe eines Krans auf eine Ladefläche des Fahrzeugs transportiert und dort abgesetzt.

Ein transportierbarer Behälter mit einer erfindungsgemäßen Reinigungseinrichtung lässt sich zu einem Einsatzort transportieren, an welchem mindestens ein Mensch sich in einem kontaminierten Bereich aufgehalten hat und hierbei Schutzbekleidungsstücke getragen hat. Die möglicherweise kontaminierten Schutzbekleidungsstücke lassen sich am Einsatzort in der Reinigungseinrichtung im transportierbaren Behälter reinigen und stehen danach in vielen Fällen wieder für einen erneuten Einsatz zur Verfügung, auch an demselben Einsatzort. Der transportierbare Behälter reduziert daher die Anzahl von Schutzbekleidungsstücken, die zu einem Einsatzort transportiert werden müssen, weil ein Schutzbekleidungsstück sich vor Ort dekontaminieren und danach erneut verwenden lässt.

Im Vergleich zu einem Fahrzeug, welches die Reinigungseinrichtung als fest eingebauten Bestandteil umfasst, hat ein transportierbarer Behälter den Vorteil, dass der transportierbare Behälter sich am Einsatzort absetzen lässt und ein Fahrzeug, welches den transportierbaren Behälter transportiert hat, anschließend für eine neue Aufgabe zur Verfügung steht. Das gleiche Fahrzeug vermag nacheinander mehrere transportierbare Behälter zu transportieren, auch unterschiedlich ausgestaltete Behälter. Die Behälter lassen sich an unterschiedliche Aufgaben anpassen, während das Fahrzeug in der Regel lediglich an die Abmessungen und das Gewicht der transportierbaren Behälter angepasst zu sein.

Bevorzugt hat der transportierbare Behälter die Abmessungen eines Standard-Containers gemäß ISO 668 oder ist als ein Wechselaufbau oder einen Wechselbehälter ausgestaltet, z.B. gemäß EN 284.

Das erfindungsgemäße Verfahren lässt sich auch unter Verwendung eines solchen transportierbaren Behälters mit einer erfindungsgemäßen Reinigungseinrichtung durchführen. Vorteile eines solchen transportierbaren Behälters sind dann auch Vorteile des Verfahrens, welches unter Verwendung eines solchen transportierbaren Behälters durchgeführt wird.

In einer Ausgestaltung stellt der transportierbare Behälter mindestens einen Dekontaminationsweg bereit. Bevorzugt stellt der Behälter zwei parallele und voneinander getrennte Dekontaminationswege bereit. Der oder jeder Dekontaminationsweg beginnt in einem Schwarzbereich, den ein Mensch mit möglicherweise kontaminierten Schutzbekleidungsstücken betritt, und führt zu einem Weißbereich, den ein Mensch betritt, nachdem er sich selbst gereinigt hat und alle Schutzbekleidungsstücke, die er getragen hat, dekontaminiert oder aussortiert sind. Der Dekontaminationsweg umfasst die oder mindestens eine Reinigungseinrichtung im transportierbaren Behälter. Falls zwei voneinander getrennte Dekontaminationswege bereitgestellt werden, lässt sich der Durchsatz durch den transportierbaren Behälter vergrößern. Schadstoffe in dem einen Dekontaminationsweg können nicht den anderen Dekontaminationsweg beeinflussen.

Bevorzugt ist in dem transportierbaren Behälter mindestens eine Horizontal-Belüftungsvorrichtung angeordnet. Die oder jede Horizontal-Belüftungsvorrichtung ist jeweils einem Dekontaminationsweg zugeordnet und vermag ein Gas in eine Richtung entgegengesetzt zu dem Dekontaminationsweg zu bewegen, also in Richtung vom Weißbereich zum Schwarzbereich. Beispielsweise stößt die Horizontal-Belüftungsvorrichtung Frischluft in den Dekontaminationsweg hinein aus oder saugt Gas aus dem Dekontaminationsweg ab. Dieses bewegte Gas vermag gasförmige Schadstoffe zum Schwarzbereich hin zu bewegen und verhindert eine erhebliche Dekontaminierung des Weißbereichs. Weiterhin verringert die bewegte Luft die Gefahr, dass sich Schadstoffe in einem Bereich ansammeln, der als dekontaminiert angesehen und entsprechend verwendet wird, beispielsweise in einem Ankleidebereich, in dem ein Mensch schadstofffreie Kleidungsstücke anzieht. Die Gefahr wird reduziert, dass ein Mensch oder ein Schutzbekleidungsstück kontaminiert den Weißbereich verlässt. Die Horizontal-Belüftungsvorrichtung lässt sich zusammen mit einem Schadstoffsensor in dem dekontaminierten Bereich verwenden, erspart aber in manchen Anwendungen die Notwendigkeit eines solchen Schadstoffsensors.

Bevorzugt umfasst der oder jeder Dekontaminationsweg jeweils einen Auskleidebereich. In diesem Auskleidebereich kann ein Mensch das oder jedes Schutzbekleidungsstück ablegen, welches dieser Mensch zuvor in einem möglicherweise kontaminierten Bereich getragen hat. Die abgelegten Schutzbekleidungsstücke lassen sich dann manuell oder automatisch in die oder eine Reinigungskabine des oder eines Dekontaminationswegs verbringen.

Bevorzugt umfasst der oder jeder Dekontaminationsweg zusätzlich jeweils einen Duschbereich und/oder einen Ankleidebereich. Im Duschbereich kann ein Mensch persönliche Körperpflege vornehmen und insbesondere seinen Körper von Schadstoffen reinigen. Im Ankleidebereich kann er gereinigte Schutzbekleidungsstücke oder sonstige nicht kontaminierte Kleidungsstücke anziehen. Diese Ausgestaltung ermöglicht es, dass zeitlich parallel sowohl die kontaminierten Schutzbekleidungsstücke gereinigt werden als auch ein Mensch, der diese Schutzbekleidungsstücke getragen hat, sich selbst reinigt.

Bevorzugt grenzt an die oder jede Reinigungskabine jeweils ein Duschbereich an. Dies ermöglicht es, dass ein Mensch, der möglicherweise kontaminierte Schutzbekleidungsstücke in die Reinigungskabine verbracht hat, rasch in den Duschbereich gehen kann, um sich zu reinigen.

Bevorzugt sind in dem oder jedem Dekontaminationsweg jeweils ein Auskleidebereich, eine erfindungsgemäße Reinigungseinrichtung mit einer Reinigungskabine, ein Duschbereich und ein Ankleidebereich hintereinander in dieser Dekontaminations-Reihenfolge angeordnet. Diese Ausgestaltung verringert die Gefahr, dass ein Mensch diese Bereiche in der falschen Reihenfolge passiert und daher einer gesundheitlichen Gefährdung ausgesetzt ist oder selber eine Kontaminierung bewirkt.

Bevorzugt umfasst der oder jeder Dekontaminationsweg weiterhin jeweils mindestens eine Vertikal-Belüftungsvorrichtung, welche ein Gas senkrecht oder schräg nach unten zu bewegen vermag, und zwar durch Ausstoßen und / oder Ansaugen, und dadurch gasförmige Schadstoffe vom Kopfbereich eines stehenden Menschen weg nach unten zu fördern vermag.

In einer Ausgestaltung sind an einer Unterseite des transportierbaren Behälters Rollen und/oder Kufen angeordnet. Dank dieser Rollen und/oder Kufen lässt der transportierbare Behälter sich auf eine Ladefläche eines Fahrzeugs ziehen und wieder von dieser Ladefläche herunterschieben oder herunterziehen, ohne dass zwingend ein Kran verwendet werden muss. An einem Einsatzort des transportierbaren Behälters steht ein solcher Kran häufig nicht zur Verfügung. Das Fahrzeug, welches den transportierbaren Behälter zu einem Einsatzort transportiert, braucht nicht notwendigerweise einen ausreichend starken Kran aufzuweisen.

In einer Alternative der Erfindung stellt der transportierbare Behälter mindestens einen Dekontaminationsweg bereit und umfasst mindestens eine Horizontal-Belüftungsvorrichtung, aber nicht notwendigerweise einen Schadstoffsensor. Auch diese Alternative bewirkt die Vorteile eines transportierbaren Behälters mit einem Dekontaminationsweg und einer Horizontal-Belüftungsvorrichtung.

Im Folgenden wird die Erfindung anhand eines Ausführungsbeispiels beschrieben. Hierbei zeigen
- Figur 1: einen Wechselbehälter mit der Reinigungseinrichtung auf einem Straßenfahrzeug;
- Figur 2: die Reinigungseinrichtung in einer Seitenansicht;
- Figur 3: die Reinigungseinrichtung in einer Draufsicht (Grundriss);
- Figur 4: mittels eines Flussdiagramms ein Vorgehen bei der Regelung der Reinigung.

Im Ausführungsbeispiel wird die Reinigungseinrichtung dafür verwendet, um die möglicherweise kontaminierte Schutzbekleidung mindestens eines Menschen zu dekontaminieren, wobei dieser Mensch (im Folgenden: Einsatzkraft) einen Rettungseinsatz in einem für Menschen gefährlichen Bereich durchgeführt hat, beispielsweise in einem brennenden oder verrauchten Gebäude oder in einer Raffinerie. Die Schutzbekleidung kann insbesondere mit Cyanwasserstoff (Blausäure, HCN) oder mit Kohlenmonoxid (CO) verunreinigt sein.

Die Reinigungseinrichtung ist Bestandteil eines sogenannten Wechselbehälters. Ein Wechselbehälter ist ein transportierbarer Behälter, insbesondere ein Container, ein Wechselaufbau, eine Wechselbrücke oder ein Behälter mit Rollen. Diese Wechselbehälter lässt sich mithilfe eines Fahrzeugs zu einem Einsatzort transportieren, beispielsweise zu einem Gebäude oder einer Raffinerie, in dem sich ein Brand ereignet hat. In dem Wechselbehälter ist zum einen die erfindungsgemäße Reinigungseinrichtung für Schutzbekleidungsstücke untergebracht. Zum anderen sind im Wechselbehälter ein Duschbereich und weitere Bereiche untergebracht, in denen Menschen Körperpflege vornehmen können.

Figur 1 zeigt einen Wechselbehälter 10 auf der Ladefläche eines Straßenfahrzeugs 90. An der in Fahrtrichtung vorderen Seitenwand des Wechselbehälters 10 ist ein Haken 14 angebracht, der mit einem Abroller 91 des Straßenfahrzeugs 90 in Eingriff steht. Mithilfe des Abrollers 91 wurde der Wechselbehälter 10 auf die Ladefläche gezogen und wird dort gehalten. Bevorzugt hat der Wechselbehälter 10 die standardisierten Abmessungen eines Containers, z.B. gemäß ISO 668, sodass Straßenfahrzeuge, Schienenfahrzeuge, Wasserfahrzeuge und Luftfahrzeuge mit standardisierten Ladeflächen zur Verfügung stehen, um einen solchen Wechselbehälter 10 zu transportieren.

Der Wechselbehälter 10 lässt sich auf dem Erdboden absetzen. Dadurch steht das Straßenfahrzeug 90 für den Transport eines weiteren Wechselbehälters zur Verfügung. Weil der Wechselbehälter 10 sich vom Straßenfahrzeug 90 trennen lässt, werden weniger Straßenfahrzeuge als Wechselbehälter benötigt.

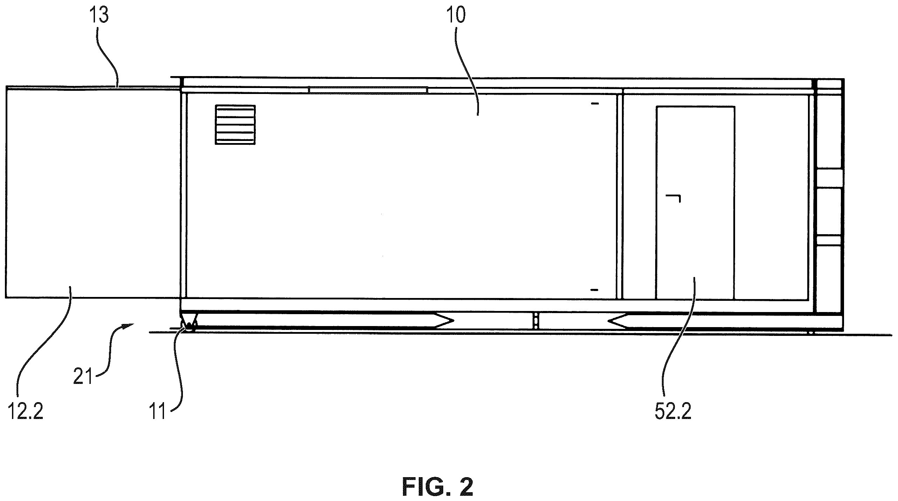

Figur 2 zeigt in einer Seitenansicht einen Wechselbehälter 10, nachdem dieser Wechselbehälter 10 abgeladen und auf den Boden aufgestellt wurde. An der Unterseite des Wechselbehälters 10 sind mehrere Rollen 11 angeordnet. Eine Seitenwand 12.2 (in der Zeichenebene von Figur 2) und ein Dach 13 (senkrecht zur Zeichenebene von Figur 2) sind aufgeklappt. Dadurch wird den Einsatzkräften in einem sogenannten Schwarzbereich 21 Schutz vor Sicht und Wetter geboten.

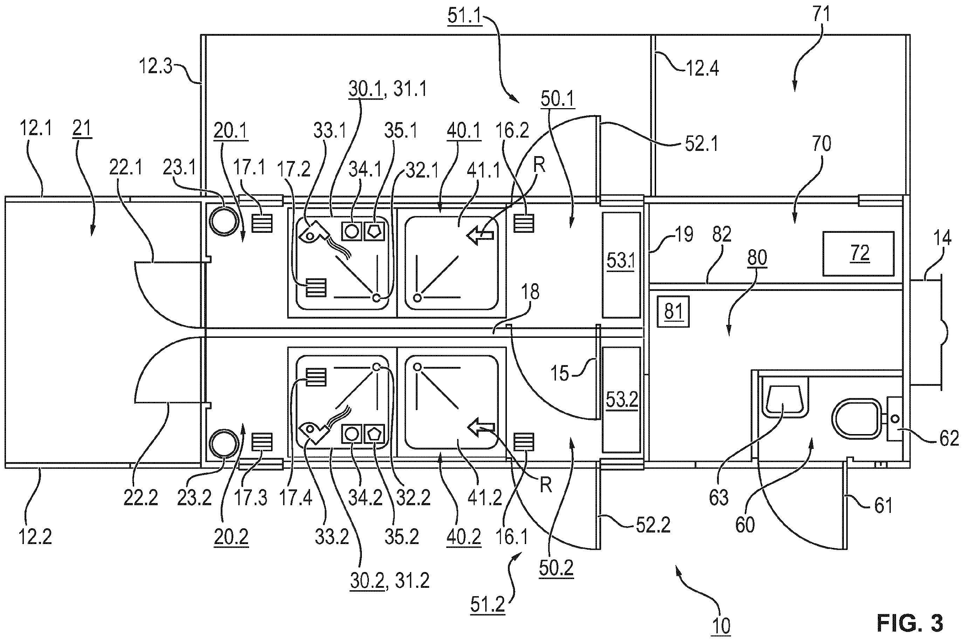

Figur 3 zeigt den Wechselbehälter 10 in einer Draufsicht, wobei das Dach fortgelassen ist, also quasi einen Grundriss des Wechselbehälters 10. Zwei Seitenwände 12.1, 12.2 an der Querseite sind aufgeklappt und begrenzen von zwei Seiten den Schwarzbereich 21. Zwei Seitenwände 12.3 und 12.4 an der Längsseite sind ebenfalls aufgeklappt und begrenzen einen Weißbereich 51.1. Möglich ist, dass die Seitenwände 12.3 und 12.4 ein zur Seite geklapptes Dach 13 tragen. Zwei weitere Seitenwände (nicht dargestellt) an der gegenüberliegenden Längswand können ebenfalls aufgeklappt werden, um einen weiteren Weißbereich 51.2 zu umgrenzen.

Einsatzkräfte mit möglicherweise kontaminierten Schutzbekleidungen begeben sich zu dem Schwarzbereich 21 des Wechselbehälters 10. Die Einsatzkräfte betreten den Wechselbehälter 10 von dem Schwarzbereich 21 aus und verlassen nach der Reinigung der Schutzbekleidung und des eigenen Körpers den Wechselbehälter 10 in einem Weißbereich 51.1, 51.2.

Im Wechselbehälter 10 sind zwei parallele Dekontaminationswege angeordnet, die vom Schwarzbereich 21 zu jeweils einem Weißbereich 51.1, 51.2 führen und voneinander durch eine bevorzugt gasdichte Wand 18 getrennt sind. Die Wand 18 verhindert, dass gasförmige Schadstoffe aus dem einen Dekontaminationsweg in den anderen Dekontaminationsweg gelangen. Jeder Dekontaminationsweg beginnt in einer Eingangstür 22.1, 22.2, die zum Schwarzbereich 21 hin zeigt, und endet in einer Ausgangstür 52.1, 52.2, die zu einem Weißbereich 51.1, 51.2 führt. In einer Ausgestaltung lässt sich die Eingangstür 22.1, 22.2 von innen verriegeln.

In jedem Dekontaminationsweg sind folgende Bestandteile - gesehen in die Richtung, in welche eine Einsatzkraft vom Schwarzbereich 21 durch den Dekontaminationsweg zu einem Weißbereich 51.1, 51.2 geht - hintereinander angeordnet:
- ein Auskleidebereich 20.1, 20.2, in dem eine Einsatzkraft ihre Schutzbekleidung ablegen kann,
- ein Reinigungsbereich 30.1, 30.2 für Schutzbekleidung mit jeweils einer Reinigungskabine 31.1, 31.2,
- ein Duschbereich 40.1, 40.2 mit jeweils eine Duschkabine 41.1, 41.2, in dem eine Einsatzkraft sich duschen kann, und
- ein Ankleidebereich 50.1, 50.2, der jeweils einen Kleiderschrank 53.1, 53.2 umfasst und in dem eine Einsatzkraft saubere Kleidung anziehen kann.

Im Ausführungsbeispiel führt ein Gang vom Auskleidebereich 20.1, 20.2 am Reinigungsbereich 30.1, 30.2 und an Duschbereich 40.1, 40.2 wobei zum Ankleidebereich 50.1, 50.2.

Jede Reinigungskabine 31.1, 31.2 vermag im Ausführungsbeispiel jeweils diejenigen Schutzbekleidungsstücke aufzunehmen, die von einer Einsatzkraft getragen worden sind, also nicht die von verschiedenen Einsatzkräften. In jeder Reinigungskabine 31.1, 31.2 befinden sich jeweils
- mindestens ein Gestell oder eine sonstige Halterung zum Tragen jeweils eines Schutzbekleidungsstücks,
- eine Menge von Waschdüsen 32.1, 32.2, die Reinigungsflüssigkeit ausstoßen und bevorzugt unterschiedliche Bereiche der Reinigungskabine 31.1, 31.2 erfassen,
- mindestens ein Heißluftgebläse 33.1, 33.2,
- optional ein nicht gezeigtes Lesegerät, welches aus einem Datenspeicher an einem Schutzbekleidungsstück eine eindeutige Kennung dieses Schutzbekleidungsstücks ausliest,
- ein Sensor 34.1, 34.2 zum Detektieren von Cyanwasserstoff (HCN) an einem Schutzbekleidungsstück und
- ein Sensor 35.1, 35.2 zum Detektieren von Kohlenmonoxid (CO) an einem Schutzbekleidungsstück.

Der Cyanwasserstoff-Sensor 34.1, 34.2 kann beispielsweise so wie in DE 19882506 B4 beschrieben aufgebaut sein.

Zum Reinigungsbereich 30.1, 30.2 gehören in einer Ausgestaltung weiterhin ein Tank für Wasser, das zum Reinigen verwendet werden soll, und optional ein Sammeltank für verunreinigtes Wasser. In einer anderen Ausgestaltung wird das Wasser zum Reinigen aus einem Hydranten entnommen.

In der Duschkabine 41.1, 41.2 sind eine Dusche und ein Abfluss angeordnet. Zum Duschbereich 40.1, 40.2 gehören optional weiterhin ein Frischwassertank, ein Brauchwassertank und ein Wasserheizer.

Bevorzugt befindet sich in jedem Bereich, der von einem Menschen betreten werden kann, insbesondere im Auskleidebereich 20.1, 20.2, in der Duschkabine 40.1, 40.2, in der Reinigungskabine 31.1, 31.2 und in dem Ankleidebereich 50.1, 50.2 jeweils eine Gegensprechanlage und/oder ein Alarmknopf, sodass ein Mensch einen Alarm auslösen und dadurch Hilfe herbeirufen kann. Optional sind Sichtfenster in einem oberen Bereich des Wechselbehälters 10 angeordnet, insbesondere in eine Höhe von 1,40m - 2,00m über den Boden. Dadurch ist es möglich, von außen das Ereignis zu entdecken, dass ein Mensch im Wechselbehälter 10 kollabiert ist, und diesen Menschen zu retten.

Ein Steuergerät 81 empfängt Signale von den Sensoren 34.1, 34.2, 35.1, 35.2 sowie optional von dem Lesegerät für eindeutige Kennungen der Schutzbekleidungsstücke. Optional empfängt das Steuergerät 81 Statusmeldungen von den Waschdüsen 32.1, 32.2 und den Heißluftgebläsen 33.1, 33.2, insbesondere Fehlermeldungen und Meldungen über fehlende Reinigungsmittel oder sonstige fehlende Betriebsmittel.

Das Steuergerät 81 steuert abhängig von empfangenen Signalen und Kennungen die Waschdüse 32.1, 32.2 und das Heißluftgebläse 33.1, 33.2 einer Reinigungskabine 31.1, 31.2 unabhängig von der anderen Reinigungskabine 31.2, 31.1 an. Das Steuergerät 81 hat Lesezugriff auf einen Datenspeicher, in dem zulässige obere Grenzwerte für Cyanwasserstoff und Kohlenmonoxid sowie ein nachfolgend beschriebenes Abbruchkriterium abgespeichert sind.

Eine Einsatzkraft kann in dem Schwarzbereich 21 eine grobe Reinigung vornehmen und Ausrüstungsgegenstände ablegen, die nicht in dem Reinigungsbereich 30.1, 30.2 gereinigt werden können oder sollen. Im Falle eines Feuerwehrmanns als Einsatzkraft sind diese Ausrüstungsgegenstände beispielsweise ein Schutzhelm und ein Pressluftatmer. Diese im Schwarzbereich 21 abgelegten Ausrüstungsgegenstände lassen sich beispielsweise in einem Lagerbereich 70 lagern.

Eine Einsatzkraft durchläuft einen Dekontaminationsweg vom Schwarzbereich 21 zu einem Weißbereich 51.1, 51.2 wie folgt:

Die Einsatzkraft betritt einen Auskleidebereich 20.1, 20.2 und legt dort eine Staubmaske an und die Schutzbekleidungsstücke ab, die kontaminiert sein können, insbesondere Jacke, Hose, Schuhe und ein Atemgerät.

Schutzeinheiten für den einmaligen Gebrauch, beispielsweise Atemschutzfilter oder Papierfilter, lassen sich in einen Abfalleimer 23.1, 23.2 im Auskleidebereich 20.1, 20.2 legen.

Die abgelegten und mit Wasser zu reinigenden Schutzbekleidungsstücke werden manuell oder von einem Förderband in einen Reinigungsbereich 30.1, 30.2 transportiert und in die jeweilige Reinigungskabine 31.1, 31.2 verbracht.

Jedes Schutzbekleidungsstück wird auf eine Halterung in der Reinigungskabine 31.1, 31.2 gehängt. Dadurch kann es gut von Reinigungsmitteln und Heißluft erreicht werden, und zwar sowohl von innen als auch von außen.

Die Sensoren 34.1, 34.2, 35.1, 35.2 messen die jeweilige Belastung eines Schutzbekleidungsstücks in der Reinigungskabine mit Cyanwasserstoff und Kohlenmonoxid.

In einer bevorzugten Ausgestaltung vermag jeweils ein nicht gezeigtes Stellglied einen Sensor 34.1, 34.2, 35.1, 35.2 relativ zu einem Schutzbekleidungsstück in der Reinigungskabine 31.1, 31.2 zu bewegen, und zwar besonders bevorzugt einerseits auf das Schutzbekleidungsstück zu und vom Schutzbekleidungsstück weg und andererseits parallel oder schräg zur Oberfläche des Schutzbekleidungsstücks. Das Steuergerät 81 steuert jedes Stellglied an. Um eine mögliche Schadstoffbelastung zu messen, werden die Sensoren 34.1, 34.2, 35.1, 35.2 bevorzugt aus einer Parkposition auf die Schutzbekleidungsstücke zu bewegt und anschließend entlang der Schutzbekleidungsstücke bewegt, um mehrere Bereiche, bevorzugt jeden Bereich, dieses Schutzbekleidungsstücks in der Rettungskabine auf eine mögliche Schadstoffbelastung zu untersuchen. Nach der Messung werden die Sensoren wieder in die Parkposition zurückbewegt. Möglich ist, dass die Sensoren 34.1, 34.2, 35.1, 35.2 in der Parkposition von einem Gehäuse umgeben sind, welches die Sensoren 34.1, 34.2, 35.1, 35.2 vor Spritzwasser und mechanischen Einflüssen schützt.

In einer Ausführungsform detektiert mindestens eine Kamera (nicht gezeigt) automatisch die jeweilige Position jedes Schutzbekleidungsstücks. Das Steuergerät 81 verarbeitet Bildsignale von der oder jeder Kamera und steuert die Stellglieder für die Sensoren abhängig von den Bildsignalen an. Diese Ausgestaltung steigert die Flexibilität der Reinigungseinrichtung, insbesondere weil zu reinigende Schutzbekleidungsstücke unterschiedliche Formen haben können und trotzdem zuverlässig eine Schadstoffbelastung detektiert wird.

Das Steuergerät 81 löst abhängig von den Signalen der Sensoren 34.1, 34.2, 35.1, 35.2 mindestens einen Reinigungsvorgang aus, bevorzugt bei Bedarf mehrere Reinigungsvorgänge.

Jeder Reinigungsvorgang umfasst den Schritt, dass zunächst die Waschdüsen 32.1, 32.2 aktiviert werden und anschließend das oder jedes Heißluftgebläse 33.1, 33.2. In einer Ausgestaltung wird während eines Reinigungsvorgangs von dem Heißluftgebläse 33.1, 33.3 permanent warme Luft von innen in die Schutzbekleidungsstücke geblasen, während die Schutzbekleidungsstücke an Halterungen in der Reinigungskabine 31.1, 31.2 stehen. Die Waschdüsen 32.1, 32.2 spritzen kaltes oder lauwarmes Wasser, optional mit Reinigungsmittel versehen, auf jedes Schutzbekleidungsstück in der Reinigungskabine 31.1, 31.2. Anschließend wird jedes Schutzbekleidungsstück von außen mit Luft abgeblasen und dadurch getrocknet.

Nach dem Reinigungsvorgang lässt sich ein Schutzbekleidungsstück wieder verwenden - vorausgesetzt die Schadstoffbelastung liegt nach der Reinigung unter den abgespeicherten Grenzwerten, was automatisch überprüft wird. Ein bevorzugtes Verfahren, wie das Steuergerät 81 Reinigungsvorgänge auslöst, wird nachfolgend näher beschrieben.

Optional legt das Steuergerät 81 mindestens einen Betriebsparameter eines Reinigungsvorgang fest, und zwar bevorzugt abhängig von Signalen der Sensoren 34.1, 34.2, 35.1, 35.2 und/oder abhängig von einer gemessenen Umgebungsbedingung, beispielsweise von der Lufttemperatur oder der Luftfeuchtigkeit außerhalb des Wechselbehälters 10. Beispiele für derartige Betriebsparameter sind beispielsweise
- die Wassermenge und optional der zeitliche Verlauf der Wassermenge, den die Waschdüsen 32.1, 32.2 pro Zeiteinheit ausstoßen,
- der Wasserdruck, den die Waschdüsen 32.1, 32.2 erzeugen,
- die Zeitspanne, über die die Waschdüsen 32.1, 32.2 aktiviert werden,
- die Menge oder die Konzentration eines Reinigungsmittels, welches dem Wasser zugemischt wird, welches die Waschdüsen 32.1, 32.2 auf die Schutzbekleidungsstücke sprühen,
- eine Lufttemperatur der Trocknungsluft des Heißluftgebläses 33.1, 33.2,
- eine Geschwindigkeit der Trocknungsluft des Heißluftgebläses 33.1, 33.2,
- eine Zeitspanne, die das Heißluftgebläse 33.1, 33.2 aktiviert wird.

Abhängig von Signalen der Sensoren 34.1, 34.2, 35.1, 35.2 entscheidet das Steuergerät 81 automatisch, ob nach der Reinigung ein Schutzbekleidungsstück in der Reinigungskabine 31.1, 31.2 frei von Schadstoffbelastung ist oder nicht. Diese Entscheidung kann dann, wenn gleichzeitig mehrere Schutzbekleidungsstücke in der Reinigungskabine gereinigt worden sind, von Schutzbekleidungsstück zu Schutzbekleidungsstück differieren.

Falls das Steuergerät 81 automatisch festgestellt hat, dass keine Schadstoffbelastung mehr vorliegt oder wenigstens jede gemessene Schadstoffbelastung unterhalb des jeweils vorgegebenen Grenzwerts liegt, so gibt sie ein Schutzbekleidungsstück als dekontaminiert frei und gibt beispielsweise eine entsprechende Meldung aus.

In einer Ausgestaltung wird diese Erfolgsmeldung nur dann ausgegeben, wenn jedes Schutzbekleidungsstück in der Reinigungskabine als dekontaminiert erkannt worden ist. Die Reinigungskabine 31.1, 31.2 wird dann manuell oder automatisch geöffnet, und die dekontaminierten Schutzbekleidungsstücke werden entnommen.

Falls das Steuergerät 81 hingegen festgestellt hat, dass mindestens ein Schutzbekleidungsstück auch nach der Reinigung noch kontaminiert ist, so veranlasst das Steuergerät 81, dass eine entsprechende Meldung ausgegeben wird. Diese Meldung kann das kontaminierte Schutzbekleidungsstück bezeichnen, beispielsweise unter Verwendung der Kennung, welche das optionale Lesegerät eingelesen hat. Jedes noch kontaminierte Schutzbekleidungsstück wird aus der Reinigungskabine 31.1, 31.2 entnommen, beispielsweise von einer Person, die bei der Entnahme eine geeignete Schutzkleidung trägt. Eine Verpackungseinrichtung 72 verpackt jedes kontaminierte Schutzbekleidungsstück. Im gezeigten Beispiel ist die Verpackungseinrichtung 72 in einem Lagerraum 70 aufgestellt. Dieser Lagerraum 70 ist durch eine Wand 19 von den beiden Dekontaminationswegen getrennt.

Nachdem eine Einsatzkraft in einem Auskleidebereich 20.1, 20.2 zu reinigende Schutzbekleidungsstücke abgelegt hat, begibt die Einsatzkraft sich zum Duschbereich 40.1, 40.2 und geht dort in eine Duschkabine 41.1, 41.2 und kann dort ihren Körper reinigen.

Nach der Körperpflege geht die Einsatzkraft zu einem Ankleidebereich 50.1, 50.2. Weil ein separater Ankleidebereich 50.1, 50.2 vorgesehen ist, wird die Notwendigkeit vermieden, dass eine Einsatzkraft nach dem Duschen wieder in den Auskleidebereich 20.1, 20.2 gehen muss, wo sie erneut kontaminiert werden könnte. In einem Kleiderschrank 53.1, 53.2 im Ankleidebereich 50.1, 50.2 liegt frische Kleidung bereit, beispielsweise Freizeitkleidung oder auch frische Schutzbekleidungsstücke. Alternativ zieht die Einsatzkraft im Ankleidebereich 50.1, 50.2 gerade erfolgreich gereinigte und anschließend als dekontaminiert erkannte Schutzbekleidungsstücke wieder an.

Im Ausführungsbeispiel befinden sich zwischen dem Auskleidebereich 20.1, 20.2 und dem Ankleidebereich 50.1, 50.2 die Reinigungskabine 30.1, 30.2 und die Duschkabine 40.1, 40.2, sodass zwischen dem Auskleidebereich 20.1, 20.2 und dem Ankleidebereich 50.1, 50.2 ein relativ großer Abstand besteht. Dadurch wird das Risiko verringert, dass eine Einsatzkraft wieder kontaminiert wird.

Die frisch bekleidete Einsatzkraft verlässt den Ankleidebereich 50.1, 50.2 und damit den Dekontaminationsweg durch eine Ausgangstür 52.1, 52.2 und gelangt in einen Weißbereich 51.1, 51.2. Die beiden Ankleidebereiche 50.1 und 50.2 sind durch eine Tür 15 miteinander verbunden. Dadurch gelangt man auch aus dem Ankleidebereich 50.2 zu der Ausgangstür 52.1 und in den Weißbereich 51.1. Dies kann erforderlich sein, wenn die Ausgangstür 52.2 sich nicht öffnen lässt, beispielsweise weil sie defekt oder abgeschlossen ist oder weil der Wechselbehälter 10 an einer Wand eines Hauses oder an einem Fahrzeug steht. Entsprechend kann man aus dem Ankleidebereich 50.1 in den Weißbereich 51.2 gelangen, wenn die Ausgangstür 52.1 blockiert ist.

Eine Horizontal-Belüftungsvorrichtung 16.1, 16.2 bewegt ein Gas, bevorzugt Frischluft, in eine Richtung R entgegengesetzt zum Dekontaminationsweg, also in Richtung von dem Ankleidebereich 50.1, 50.2 zu dem Auskleidebereich 20.1, 20.2. Dieses Gas transportiert gasförmige Schadstoffe, die von einem Schutzbekleidungsstück abgegeben worden sein können, zurück zum Auskleidebereich 20.1, 20.2 und optional in den Schwarzbereich 21. Die Horizontal-Belüftungsvorrichtung 16.1, 16.2 verhindert insbesondere, dass sich gasförmige Schadstoffe im Ankleidebereich 50.1, 50.2 ansammeln. Im Ausführungsbeispiel ist die Horizontal-Belüftungsvorrichtung im Ankleidebereich 50.1, 50.2 angeordnet, beispielsweise an der Decke.

In jedem Auskleidebereich 20.1, 20.2 und in jedem Reinigungsbereich 30.1, 30.2 ist bevorzugt jeweils eine Vertikal-Belüftungsvorrichtung 17.1, 17.2, 17.3, 17.4 angeordnet. Jede Vertikal-Belüftungsvorrichtung 17.1, 17.2, 17.3, 17.4 bewegt ein Gas, bevorzugt Frischluft, von einem Deckenbereich senkrecht oder schräg nach unten zu einem Bodenbereich des Wechselbehälters 10. Die Vertikal-Belüftungsvorrichtungen 17.1, 17.2, 17.3, 17.4 transportieren dadurch gasförmige Schadstoffe aus dem Kopfbereich einer Einsatzkraft weg und zu dem Fußbereich.

Neben dem Weißbereich 51.1 ist ein Außenbereich 71 des Lagerbereichs 70 angeordnet. In einer Ausgestaltung kann man durch eine nicht dargestellte Rolltür an einer Seitenwand des Wechselbehälters 10 aus dem Außenbereich 71 in den Lagerbereich 70 gelangen.

Neben den Lagerbereich 70 sind ein Technikbereich 80 und ein WC-Bereich 60 angeordnet. Der Technikbereich 80 ist durch eine Wand 82 von dem Lagerbereich 70 getrennt. Der WC-Bereich 60 lässt sich durch eine Tür 61 verschließen und umfasst eine Toilette 62 und ein Waschbecken 63.

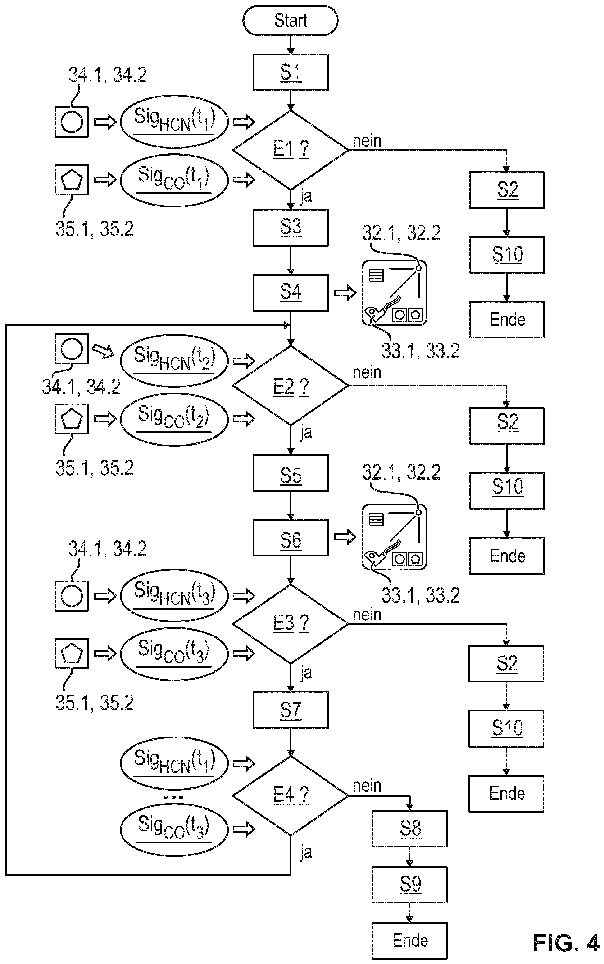

Figur 4 zeigt mittels eines Flussdiagramms eine Ausgestaltung, wie eine automatische Reinigung von Schutzbekleidungsstücken in einer Reinigungskabine 31.1, 31.2 und vom Steuergerät 81 geregelt durchgeführt wird.

Im Schritt S1 werden die Schutzbekleidungsstücke einer Einsatzkraft in die Reinigungskabine 31.1, 31.2 verbracht. Die Reinigungskabine 31.1, 31.2 wird verriegelt.

Das Steuergerät 81 empfängt ein Signal Sig_{HCN}(t₁) von dem Sensor 34.1, 34.2, welches eine Information über den initialen Gehalt von Cyanwasserstoff an den Schutzbekleidungsstücken in der Reinigungskabine 31.1, 31.2 enthält, sowie ein Signal Sig_{CO}(t₁) von dem Sensor 35.1, 35.2, welches eine Information über den initialen Gehalt von Kohlenmonoxid an den Schutzbekleidungsstücken enthält. "Initial" bedeutet: vor einer möglichen Reinigung.

Das Steuergerät 81 trifft automatisch und abhängig von den Signalen Sig_{HCN}(t₁) und Sig_{CO}(t₁) die Entscheidung E1?, ob die Schutzbekleidungsstücke in der Reinigungskabine 31.1, 31.2 kontaminiert sind oder nicht - genauer: ob mindestens ein Schutzbekleidungsstück kontaminiert ist.

Falls kein Schutzbekleidungsstück kontaminiert sind (Zweig nein), so gibt das Steuergerät 81 im Schritt S2 eine entsprechende Meldung aus und veranlasst, dass die Reinigungskabine 31.1, 31.2 wieder entriegelt wird.

Im Schritt S10 werden die Schutzbekleidungsstücke aus der Reinigungskabine 31.1, 31.2 entnommen. Die Reinigungskabine 31.1, 31.2 steht nunmehr für die Reinigung weiterer Schutzbekleidungsstücke zur Verfügung.

Falls mindestens ein Schutzbekleidungsstück kontaminiert ist (Zweig Ja), so legt das Steuergerät 81 in einem optionalen Schritt S3 mindestens einen Betriebsparameter eines Reinigungsvorgang fest. Beispiele für derartige Betriebsparameter wurden oben aufgelistet. Optional verwendet das Steuergerät 81 im Schritt S3 die Signale Sig_{HCN}(t₁) und Sig_{CO}(t₁) und/oder gemessene Umgebungsbedingungen, um die Betriebsparameter festzulegen.

Das Steuergerät 81 prüft, ob die Reinigungskabine 31.1,31.2 tatsächlich verriegelt ist, und löst bei Verriegelung den Schritt S4 aus, nämlich einen initialen Reinigungsvorgang. Das Steuergerät 81 aktiviert die Waschdüsen 32.1, 32.2, optional gemäß den im Schritt S3 festgelegten Betriebsparametern. Anschließend aktiviert das Steuergerät 81 im Schritt S4 das Heißluftgebläse 33.1, 33.2.

In einer Ausgestaltung ist ein Reinigungsvorgang einschließlich Trocknung beendet, wenn eine vorgegebene Zeitspanne verstrichen ist, die bevorzugt zwischen 5 min und 10 min liegt. In einer anderen Ausgestaltung wird Wasser, optional mit Reinigungsmittel versetzt, für eine vorgegebene Zeitspanne auf die Schutzbekleidungsstücke gespritzt. Anschließend wird die Trocknung der Schutzbekleidungsstücke eingeleitet. Ein Trocknungssensor misst wiederholt, wie feucht die Schutzbekleidungsstücke aktuell noch sind. Der Trocknungsvorgang wird also geregelt.

Nach dem initialen Reinigungsvorgang wird erneut die Schadstoffbelastung der Schutzbekleidungsstücke gemessen. Diese erneute Messung liefert die Signale Sig_{HCN}(t₂) und Sig_{CO}(t₂). Im Schritt E2? trifft das Steuergerät abhängig von den Signalen Sig_{HCN}(t₂) und Sig_{CO}(t₂) die Entscheidung, ob die Schutzbekleidungsstücke nach dem initialen Reinigungsvorgang noch kontaminiert sind oder nicht.

Falls alle Schutzbekleidungsstücke nunmehr dekontaminiert sind (Zweig nein), so veranlasst das Steuergerät 81, dass nunmehr der Schritt S2 vorgenommen wird. Die dekontaminierten Schutzbekleidungsstücke werden im Schritt S10 aus der Reinigungskabine 31.1, 31.2 entnommen.

Falls mindestens ein Schutzbekleidungsstück auch nach dem initialen Reinigungsvorgang S4 noch kontaminiert ist (Zweig Ja der Entscheidung E2?), so legt das Steuergerät 81 in dem optionalen Schritt S5 Betriebsparameter für einen weiteren Reinigungsvorgang fest. Bevorzugt verwendet sie für diese Festlegung die Signale Sig_{HCN}(t₂) und Sig_{CO}(t₂) und optional Umgebungsbedingungen.

Das Steuergerät 81 löst den Schritt S6 aus, nämlich einen weiteren Reinigungsvorgang. Wiederum aktiviert das Steuergerät 81 zunächst die Waschdüsen 32.1, 32.2 und dann das Heißluftgebläse 33.1, 33.2, optional abhängig von den festgelegten Betriebsparametern. Bevorzugt werden alle Schutzbekleidungsstücke in der Reinigungskabine 31.1, 31.2 dem weiteren Reinigungsvorgang S6 unterzogen, auch wenn ein Schutzbekleidungsstück bereits durch den initialen Reinigungsvorgang S4 dekontaminiert worden ist.

Nach dem weiteren Reinigungsvorgang S6 wird zum dritten Mal die Schadstoffbelastung der Schutzbekleidungsstücke gemessen. Diese dritte Messung liefert die Signale Sig_{HCN}(t₃) und Sig_{CO}(t₃). Im Schritt E3? trifft das Steuergerät 81 abhängig von den Signalen Sig_{HCN}(t₃) und Sigco(ts) die Entscheidung, ob die Schutzbekleidungsstücke nach dem weiteren Reinigungsvorgang S6 noch kontaminiert sind oder nicht.

Falls alle Schutzbekleidungsstücke nach dem weiteren Reinigungsvorgang S6 dekontaminiert sind (Zweig nein), so veranlasst das Steuergerät 81, dass nunmehr der Schritt S2 und nachfolgend der Schritt S10 vorgenommen wird. Die dekontaminierten Schutzbekleidungsstücke werden aus der Reinigungskabine 31.1, 31.2 entnommen.

Falls mindestens ein Schutzbekleidungsstück auch nach dem weiteren Reinigungsvorgang S6 noch kontaminiert ist (Zweig Ja), so könnte ein dritter Reinigungsvorgang vorgenommen werden. Möglich ist auch, die immer noch kontaminierten Schutzbekleidungsstücke zu entnehmen und zu versiegeln.

In einer bevorzugten Ausgestaltung ermittelt das Steuergerät 81 in einem Schritt S7 einerseits abhängig von den Signalen Sig_{HCN}(t₃) und Sigco(ts) die aktuelle Höhe der Schadstoffbelastung. Andererseits prüft es im Schritt S7, wie stark die Schadstoffbelastung durch den initialen Reinigungsvorgang S4 und wie stark sie durch den weiteren Reinigungsvorgang S6 abgenommen hat. Hierfür verwendet das Steuergerät 81 alle Signale SigHcN(t1) und Sigco(t1), Sig_{HCN}(ₜ₂) und Sigco(t2), Sig_{HCN}(t₃) und Sig_{CO}(ₜ₃).

Das Steuergerät 81 trifft automatisch die Entscheidung E4?, nämlich ob ein dritter Reinigungsvorgang durchgeführt wird oder ob ein vorgegebenes Abbruchkriterium erfüllt ist. Das Abbruchkriterium hängt einerseits von der Anzahl der bislang durchgeführten Reinigungsvorgänge ab und andererseits von dem Ergebnis des Schritts S7. Insbesondere dann, wenn eine maximale Anzahl von Reinigungsvorgängen erreicht ist, die Reinigungskabine 31.1, 31.2 für weitere Schutzbekleidungsstücke benötigt wird oder wenn sich die Schadstoffbelastung durch die vorherigen Reinigungsvorgänge S4 und S6 nicht ausreichend reduziert worden ist, so ist das Abbruchkriterium erfüllt. Das Steuergerät 81 entscheidet automatisch, dass das Abbruchkriterium erfüllt ist und daher kein dritter Reinigungsvorgang durchgeführt wird (Zweig nein).

Das Steuergerät 81 löst im Zweig nein den Schritt S8 aus. Eine Meldung wird ausgegeben, dass mindestens ein Schutzbekleidungsstück in der Reinigungskabine 31.1, 31.2 immer noch kontaminiert sind. Außerdem wird im Schritt S8 die Reinigungskabine 31.1, 31.2 entriegelt. Alle - oder nur die noch kontaminierten - Schutzbekleidungsstücke werden im Schritt S9 aus der Reinigungskabine 31.1, 31.2 entnommen und bevorzugt mithilfe der Verpackungseinrichtung 72 luftdicht verpackt

Beim Durchlaufen des Zweiges ja wird ein dritter Reinigungsvorgang durchgeführt.

### Bezugszeichenliste

| | |
|---|---|
| 10 | Wechselbehälter |
| 11 | Rollen am Boden des Wechselbehälters 10 |
| 12.1, 12.2 | Seitenwände an der Querseite des Wechselbehälters 10 |
| 12.3, 12.4 | Seitenwände an der Längsseite des Wechselbehälters 10 |
| 14 | Haken am Wechselbehälter 10, greift in den Abroller 91 ein |
| 16.1, 16.2 | Horizontal-Belüftungsvorrichtung, bewegt ein Gas entgegengesetzt des Dekontaminationswegs, ist bevorzugt im Ankleidebereich 50.1, 50.2 angeordnet |
| 17.1, 17.3 | Vertikal-Belüftungsvorrichtung im Auskleidebereich 20.1, 20.2, bewegt ein Gas vertikal oder schräg nach unten |
| 17.2, 17.4 | Vertikal-Belüftungsvorrichtung in der Reinigungskabine 31.1, 31.2, bewegt ein Gas vertikal oder schräg nach unten |
| 18 | gasdichte Wand im Wechselbehälter 10 zwischen den beiden Dekontam inationswegen |
| 19 | Wand im Wechselbehälter 10, trennt den Lagerraum 70 von den beiden Dekontaminationswegen |
| 20.1, 20.2 | Auskleidebereich im Wechselbehälter 10 |
| 21 | Schwarzbereich, befindet sich vor den Eingangstüren 22.2, 22.2 |
| 22.2, 22.2 | Eingangstür hinter dem Schwarzbereich 21 |
| 23.1, 23.2 | Abfalleimer im Auskleidebereich 20.1, 20.2 |
| 30.1, 30.2 | Reinigungsbereich im Wechselbehälter 10, umfasst eine Reinigungskabine 31.1, 31.2 |
| 31.1, 31.2 | Reinigungskabine im Reinigungsbereich 30.1, 30.2 |
| 32.1, 32.2 | Waschdüsen in der Reinigungskabine 31.1, 31.2 |
| 33.1, 33.2 | Heißluftgebläse in der Reinigungskabine 31.1, 31.2 |
| 34.1, 34.2 | Sensor zum Detektieren von Cyanwasserstoff (HCN) in der Reinigungskabine 31.1, 31.2 |
| 35.1, 35.2 | Sensor zum Detektieren von Kohlenmonoxid (CO) in der Reinigungskabine 31.1, 31.2 |
| 40.1, 40.2 | Duschbereich im Wechselbehälter 10 |
| 41.1, 41.2 | Duschkabine im Duschbereich 40.1, 40.2 |
| 50.1, 50.2 | Ankleidebereich im Wechselbehälter 10 |
| 51.1, 51.2 | Weißbereich hinter der Ausgangstür 52.1, 52.2 |
| 52.1, 52.2 | Ausgangstür vor dem Weißbereich 51.1, 51.2 |
| 53.1, 53.2 | Kleiderschrank im Ankleidebereich 50.1, 50.2 |
| 60 | WC-Bereich, durch die Tür 61 verschließbar, umfasst eine Toilette 62 und ein Waschbecken 63 |
| 61 | Tür, welche den WC-Bereich 60 zu verschließen vermag |
| 62 | Toilette im WC-Bereich 60 |
| 63 | Waschbecken im WC-Bereich 60 |
| 70 | Lagerraum, in dem die Verpackungseinrichtung 72 steht und in dem Ausrüstungsgegenstände gelagert und vorrätig gehalten werden können, durch die Wand 19 von den beiden Dekontaminationswegen getrennt |
| 72 | Verpackungseinrichtung für kontaminierte Schutzbekleidungsstücke, befindet sich im Lagerraum 70 |
| 80 | Technikbereich, durch eine Wand 82 von dem Lagerbereich 70 abgetrennt |
| 81 | Steuergerät, empfängt und verarbeitet Signale von den Sensoren 34.1, 34.2, 35.1, 35.2 und steuert die Reinigungsgeräte in den Reinigungskabinen 31.1 und 31.2 an |
| 82 | Wand zwischen dem Lagerbereich 70 und dem Technikbereich 80 |
| 90 | Straßenfahrzeug mit einer Ladefläche, vermag den Wechselbehälter 10 auf der Ladefläche zu tragen |
| 91 | Abroller am Straßenfahrzeug 90, steht mit dem Haken 14 in Eingriff |
| E1? | Entscheidung: Schutzbekleidungsstücke vor dem initialen Reinigungsvorgang S4 kontaminiert? |
| E2? | Entscheidung: Schutzbekleidungsstücke nach dem initialen Reinigungsvorgang S4 noch kontaminiert? |
| E3? | Entscheidung: Schutzbekleidungsstücke nach dem weiteren Reinigungsvorgang S6 immer noch kontaminiert? |
| E4? | Entscheidung: dritten Reinigungsvorgang auslösen? |
| R | Richtung, in welche die Horizontal-Belüftungsvorrichtung 16.1, 16.2 ein Gas bewegt, ist entgegengesetzt zu den Dekontam inationswegen |
| S1 | Schritt: Schutzbekleidungsstücke in die Reinigungskabine 31.1, 31.2 verbringen, Reinigungskabine 31.1, 31.2 verriegeln |
| S2 | Schritt auslösen: Meldung ausgegeben, dass die Schutzbekleidungsstücke nicht (mehr) dekontaminiert sind, Reinigungskabine 31.1, 31.2 entriegeln |
| S3 | optionaler Schritt: abhängig von den Signalen Sig_{CO}(t₁) und Sig_{HCN}(t₁) Werte für die Betriebsparameter des initialen Reinigungsvorgangs S4 festlegen |
| S4 | Schritt: initialen Reinigungsvorgang auslösen und durchführen |
| S5 | optionaler Schritt: abhängig von den Signalen Sig_{CO}(t₂) und Sig_{HCN}(t₂) Werte für die Betriebsparameter des weiteren Reinigungsvorgangs S6 festlegen |
| S6 | Schritt: weiteren Reinigungsvorgang auslösen und durchführen |
| S7 | Schritt: absolute Schadstoffbelastung nach dem weiteren Reinigungsvorgang S6 sowie Abnahme der Schadstoffbelastung durch die Reinigungsvorgänge S4, S6 ermitteln |
| S8 | Schritt: Meldung ausgegeben, dass Schutzbekleidungsstücke kontaminiert sind |
| S9 | Schritt: Reinigungskabine 31.1, 31.2 entriegeln, kontaminierte Schutzbekleidungsstücke aus der Reinigungskabine 31.1, 31.2 entnehmen und luftdicht verpacken |
| S10 | Schritt: dekontaminierte Schutzbekleidungsstücke aus der Reinigungskabine 31.1, 31.2 entnehmen |
| Sig_{CO}(t₁), Sig_{CO}(t₂), Sig_{CO}(t₃) | Signale von dem Kohlenmonoxid-Sensor 35.1, 35.2 |
| SigHCN(t1), Sig_{HCN}(t₂), Sig_{HCN}(t₃) | Signale von dem Cyanwasserstoff-Sensor 34.1, 34.2 |
| t1 | Zeitpunkt vor dem initialen Reinigungsvorgang S4 |
| t2 | Zeitpunkt zwischen dem initialen Reinigungsvorgang S4 und dem weiteren Reinigungsvorgang S6 |
| t₃ | Zeitpunkt nach dem weiteren Reinigungsvorgang S6 |

## Patentansprüche

1. Reinigungseinrichtung (30.1, 30.2) zum Reinigen mindestens eines Schutzbekleidungsstücks,
wobei die Reinigungseinrichtung (30.1, 30.2)
- mindestens eine Reinigungskabine (31.1, 31.2),
- mindestens eine Reinigungseinheit (32.1, 32.2, 33.1, 33.2),
- mindestens einen Schadstoffsensor (34.1, 34.2, 35.1, 35.2) und
- ein Steuergerät (81)
umfasst,
wobei die oder jede Reinigungskabine (31.1, 31.2) dazu ausgestaltet ist, mindestens ein zu dekontaminierendes Schutzbekleidungsstück aufzunehmen, bevorzugt gleichzeitig mehrere Schutzbekleidungsstücke, wobei die oder jede Reinigungseinheit (32.1, 32.2, 33.1, 33.2)
- jeweils einer Reinigungskabine (31.1, 31.2) zugeordnet ist und
- dazu ausgestaltet ist, mindestens einen Reinigungsvorgang (S4, S6) zur Dekontaminierung mindestens eines in der Reinigungskabine (31.1, 31.2) aufgenommenen Schutzbekleidungsstücks durchzuführen,
wobei der oder jeder Schadstoffsensor (34.1, 34.2, 35.1, 35.2)
- jeweils einer Reinigungskabine (31.1, 31.2) zugeordnet ist und
- dazu ausgestaltet ist, jeweils mindestens einen Schadstoff (31.1, 31.2) an einem in der zugeordneten Reinigungskabine (31.1, 31.2) aufgenommenen Schutzbekleidungsstück zu detektieren,
**dadurch gekennzeichnet, dass**
das Steuergerät (81) dazu ausgestaltet ist, automatisch abhängig von mindestens einem Signal [Sig_{CO}(t₁), Sig_{CO}(t₂), Sig_{CO}(t₃), Sig_{HCN}(t₁), Sig_{HCN}(t₂), Sig_{HCN}(t₃)] des oder mindestens eines Schadstoffsensors (34.1, 34.2, 35.1, 35.2)
- einen Reinigungsvorgang (S4, S6) durch die Reinigungseinheit (32.1, 32.2, 33.1, 33.2) auszulösen oder
- zu entscheiden, keinen Reinigungsvorgang auszulösen, und bevorzugt eine entsprechende Meldung auszugeben, und
wobei das Steuergerät (81) dazu ausgestaltet ist, automatisch
einen initialen Reinigungsvorgang (S4) auszulösen und
abhängig von einem nach dem initialen Reinigungsvorgang (S4) erzeugten initialen Signal [Sig_{CO}(t₁), Sig_{HCN}(t₁)] des oder mindestens eines Schadstoffsensors (34.1, 34.2, 35.1, 35.2)
- einen weiteren Reinigungsvorgang (S6) durch die Reinigungseinheit (32.1, 32.2, 33.1, 33.2) auszulösen oder
- zu entscheiden, keinen weiteren Reinigungsvorgang auszulösen, und bevorzugt eine entsprechende Meldung auszugeben, und
wobei die Reinigungseinrichtung (30.1, 30.2) dazu ausgestaltet ist, dass
- die Reinigungseinheit (32.1, 32.2, 33.1, 33.2) einen initialen Reinigungsvorgang (S4) zur Dekontaminierung des oder jedes Schutzbekleidungsstücks durchführt,
- der Schadstoffsensor (34.1, 34.2, 35.1, 35.2) nach dem initialen Reinigungsvorgang (S4) eine Messung auf mindestens einen Schadstoff an dem oder mindestens einem Schutzbekleidungsstück vornimmt, während das Schutzbekleidungsstück sich in der Reinigungskabine (31.1, 31.2) befindet, und
- dann, wenn das oder mindestens ein Schutzbekleidungsstück in der Reinigungskabine (31.1, 31.2) noch kontaminiert ist, die Reinigungseinheit (32.1, 32.2, 33.1, 33.2) einen weiteren Reinigungsvorgang (S6) zur Dekontaminierung des oder mindestens eines Schutzbekleidungsstücks durchführt.

2. Reinigungseinrichtung (30.1, 30.2) nach Anspruch 1,
**dadurch gekennzeichnet, dass**
das Steuergerät (81) dazu ausgestaltet ist, nach dem weiteren Reinigungsvorgang (S6) automatisch
abhängig von dem initialen Signal [Sig_{CO}(t₁), Sig_{HCN}(t₁)] und einem nach dem weiteren Reinigungsvorgang (S6) erzeugten weiteren Signal [Sig_{CO}(t₂), Sig_{HCN}(t₂)] des Schadstoffsensors (34.1, 34.2, 35.1, 35.2)
zu entscheiden, ob ein in der Reinigungskabine (31.1, 31.2) aufgenommenes Schutzbekleidungsstück noch kontaminiert ist oder nicht.

3. Reinigungseinrichtung (30.1, 30.2) nach einem der vorhergehenden Ansprüche,
**dadurch gekennzeichnet, dass**
das Steuergerät (81) dazu ausgestaltet ist,
automatisch abhängig von einem Signal [Sig_{CO}(t₁), Sig_{HCN}(t₁)] des Schadstoffsensors (34.1, 34.2, 35.1, 35.2) zu entscheiden (E1?),
ob eine Dekontaminierung mindestens eines in der Reinigungskabine (31.1, 31.2) aufgenommenen Schutzbekleidungsstücks erforderlich ist oder nicht, und
- dann, wenn eine Dekontaminierung erforderlich ist, einen Reinigungsvorgang (S4) auszulösen und
- dann, wenn keine Dekontaminierung erforderlich ist, eine entsprechende Meldung auszugeben.

4. Reinigungseinrichtung (30.1, 30.2) nach einem der vorhergehenden Ansprüche,
**dadurch gekennzeichnet, dass**
die Reinigungseinrichtung (30.1, 30.2) ein Stellglied für den oder mindestens einen Schadstoffsensor (34.1, 34.2, 35.1, 35.2) umfasst,
wobei das Stellglied dazu ausgestaltet ist, den Schadstoffsensor (34.1, 34.2, 35.1, 35.2) relativ zu der Oberfläche eines in der Reinigungskabine (31.1, 31.2) aufgenommenen Schutzbekleidungsstücks zu bewegen.

5. Reinigungseinrichtung (30.1, 30.2) nach einem der vorhergehenden Ansprüche,
**dadurch gekennzeichnet, dass**
das Steuergerät (81) dazu ausgestaltet ist,
automatisch abhängig von mindestens einem Signal [Sig_{CO}(t₁), Sig_{CO}(t₂), Sigco(t3), Sig_{HCN}(t₁), Sig_{HCN}(t₂), SigHCN(t₃)] des oder mindestens eines Schadstoffsensors (34.1, 34.2, 35.1, 35.2)
einen Wert für mindestens einen Betriebsparameter für den oder einen Reinigungsvorgang (S4, S6) durch die Reinigungseinheit (32.1, 32.2, 33.1, 33.2) festzulegen und
die Reinigungseinheit (31.1, 31.2) so anzusteuern, dass die Reinigungseinheit (31.1, 31.2) den Reinigungsvorgang (S4, S6) entsprechend dem oder jedem festgelegten Betriebsparameter-Wert durchführt.

6. Reinigungseinrichtung (30.1, 30.2) nach einem der vorhergehenden Ansprüche,
**dadurch gekennzeichnet, dass**
die Reinigungseinrichtung (30.1, 30.2) mindestens eine Vertikal-Belüftungsvorrichtung (17.2, 17.4) umfasst,
welche dazu ausgestaltet ist, ein Gas, bevorzugt Frischluft, in eine Richtung vertikal oder schräg nach unten zu bewegen,
bevorzugt von einem Deckenbereich zu einem Bodenbereich der Reinigungskabine (31.1, 31.2).

7. Verwendung einer Reinigungseinrichtung (30.1, 30.2) nach einem der Ansprüche 1 bis 6
zur Reinigung mindestens eines Schutzbekleidungsstücks,
bevorzugt zur gleichzeitigen Reinigung mehrerer Schutzbekleidungsstücke.

8. Transportierbarer Behälter (10) mit mindestens einer Reinigungseinrichtung (30.1, 30.2) nach einem der Ansprüche 1 bis 6.

9. Transportierbarer Behälter (10) nach Anspruch 8,
**dadurch gekennzeichnet, dass**
der transportierbare Behälter (10) mindestens einen Dekontaminationsweg bereitstellt,
bevorzugt zwei parallel angeordnete und voneinander abgetrennte Dekontaminationswege,
wobei der oder jeder bereitgestellte Dekontaminationsweg
- von einem Schwarzbereich (21) zu einem Weißbereich (51.1, 51.2) führt und
- die oder jeweils eine Reinigungseinrichtung (30.1, 30.1) umfasst.

10. Transportierbarer Behälter (10) nach Anspruch 9,
**dadurch gekennzeichnet, dass**
die Reinigungseinrichtung (30.1, 30.2) mindestens eine Horizontal-Belüftungsvorrichtung (16.1, 16.2) umfasst,
wobei die oder jede Horizontal-Belüftungsvorrichtung (16.1, 16.2) dazu ausgestaltet ist, ein Gas, bevorzugt Frischluft, in eine Richtung (R) entgegengesetzt zu dem oder jeweils einem Dekontaminationsweg zu bewegen.

11. Transportierbarer Behälter (10) nach einen der Ansprüche 8 bis 10,
**dadurch gekennzeichnet, dass**
die Reinigungseinrichtung (30.1, 30.2)
- einen Auskleidebereich (20.1, 20.2), einen Duschbereich (40.1, 40.2) und / oder einen Ankleidebereich (50.1, 50.2) sowie
- mindestens eine Vertikal-Belüftungsvorrichtung (17.1, 17.2)
umfasst,
wobei die oder jede Vertikal-Belüftungsvorrichtung (17.1, 17.3) dazu ausgestaltet ist,
im Auskleidebereich (20.1, 20.2), Duschbereich (40.1, 40.2) und / oder im Ankleidebereich (50.1, 50.2) in dem oder einem Dekontaminationsweg
ein Gas, bevorzugt Frischluft, in eine vertikale oder schräge Richtung zu bewegen,
bevorzugt von einem Deckenbereich zu einem Bodenbereich des Auskleidebereichs (20.1, 20.2), des Duschbereichs (40.1, 40.2) und / oder des Ankleidebereichs (50.1, 50.2).

12. Transportierbarer Behälter (10) nach einen der Ansprüche 8 bis 11,
**dadurch gekennzeichnet, dass**
der oder jeder Dekontaminationsweg jeweils
- einen Auskleidebereich (20.1, 20.2),
- die oder eine Reinigungseinrichtung (30.1, 30.2) gemäß einem der Ansprüche 1 bis 6,
- einen Duschbereich (40.1, 40.2) und
- einen Ankleidebereich (50.1, 50.2)
umfasst,
die in einer Dekontaminations-Reihenfolge hintereinander angeordnet sind.

13. Verwendung eines transportierbaren Behälters (10) gemäß einem der Ansprüche 8 bis 12
zur Reinigung mindestens eines Schutzbekleidungsstücks,
bevorzugt zur gleichzeitigen Reinigung mehrerer Schutzbekleidungsstücke.

14. Verfahren zur Dekontaminierung mindestens eines Schutzbekleidungsstücks,
bevorzugt zur gleichzeitigen Dekontaminierung mehrerer Schutzbekleidungsstücke,
unter Verwendung einer Reinigungseinrichtung (30.1, 30.2), die
- mindestens eine Reinigungskabine (31.1, 31.2),
- mindestens eine Reinigungseinheit (32.1, 32.2, 33.1, 33.2),
- mindestens ein Schadstoffsensors (34.1, 34.2, 35.1, 35.2) und
- ein Steuergerät (81)
umfasst,
wobei jede Reinigungseinheit (32.1, 32.2, 33.1, 33.2) jeweils einer Reinigungskabine (31.1, 31.2) zugeordnet ist und **dadurch gekennzeichnet, dass**
das Verfahren die Schritte umfasst, dass
- das oder jedes Schutzbekleidungsstück in die oder eine Reinigungskabine (31.1, 31.2) verbracht wird,
- das Steuergerät (81) automatisch einen initialen Reinigungsvorgang zur Dekontaminierung des oder jedes Schutzbekleidungsstücks (S4) auslöst,
- die Reinigungseinheit (32.1, 32.2, 33.1, 33.2) den initialen Reinigungsvorgang (S4) durchführt,
- der Schadstoffsensor (34.1, 34.2, 35.1, 35.2) nach dem initialen Reinigungsvorgang (S4) eine Messung auf mindestens einen Schadstoff an dem oder mindestens einem Schutzbekleidungsstück vornimmt, während das Schutzbekleidungsstück sich in der Reinigungskabine (31.1, 31.2) befindet,
- das Steuergerät (81) automatisch abhängig von einem Ergebnis der Messung durch den Schadstoffsensor (34.1, 34.2, 35.1, 35.2) entscheidet (E2?), ob das oder mindestens ein Schutzbekleidungsstück noch kontaminiert ist oder nicht,
- dann, wenn das oder mindestens ein Schutzbekleidungsstück in der Reinigungskabine (31.1, 31.2) noch kontaminiert ist, das Steuergerät (81) automatisch einen weiteren Reinigungsvorgang (S6) zur Dekontaminierung des oder mindestens eines Schutzbekleidungsstücks auslöst,
- die Reinigungseinheit (32.1, 32.2, 33.1, 33.2) den weiteren Reinigungsvorgang (S6) durchführt und
- bevorzugt dann, wenn das oder jedes Schutzbekleidungsstück in der Reinigungskabine (31.1, 31.2) nicht mehr kontaminiert ist oder ein vorgegebenes Abbruchkriterium zum Abbrechen der Reinigung erfüllt ist, eine entsprechende Meldung ausgegeben wird.

15. Verfahren nach Anspruch 14,
**dadurch gekennzeichnet, dass**
- der Schadstoffsensor (34.1, 34.2, 35.1, 35.2) vor dem initialen Reinigungsvorgang (S4) eine initiale Messung auf einen Schadstoff an dem Schutzbekleidungsstück vornimmt, während das Schutzbekleidungsstück sich in der Reinigungskabine (31.1, 31.2) befindet,
- das Steuergerät (81) automatisch abhängig von einem Ergebnis der initialen Messung durch den Schadstoffsensor (34.1, 34.2, 35.1, 35.2) entscheidet (E1?), ob das Schutzbekleidungsstück kontaminiert ist oder nicht, und
- das Steuergerät (81) den initialen Reinigungsvorgang (S4) nur dann auslöst und der initiale Reinigungsvorgang (S4) nur dann durchgeführt wird, wenn das Schutzbekleidungsstück kontaminiert ist.

16. Verfahren nach Anspruch 14 oder Anspruch 15,
**dadurch gekennzeichnet, dass**
der Schadstoffsensor (34.1, 34.2, 35.1, 35.2) nach dem weiteren Reinigungsvorgang (S6) eine weitere Messung auf den Schadstoff an dem Schutzbekleidungsstück vornimmt, während das Schutzbekleidungsstück sich in der Reinigungskabine (31.1, 31.2) befindet,
abhängig von dem Ergebnis der Messung und einem Ergebnis der weiteren Messung, die durch den Schadstoffsensor (34.1, 34.2, 35.1, 35.2) durchgeführt worden sind,
das Steuergerät (81) automatisch entscheidet (E3?), ob das oder mindestens ein Schutzbekleidungsstück noch kontaminiert ist oder nicht, und
dann, wenn das oder mindestens ein Schutzbekleidungsstück noch kontaminiert ist,
- das Steuergerät (81) einen dritten Reinigungsvorgang auslöst und der dritte Reinigungsvorgang durchgeführt wird oder
- das Steuergerät (81) automatisch entscheidet wird, die Reinigung abzubrechen und
bevorzugt eine Meldung ausgegeben wird, dass das Schutzbekleidungsstück noch kontaminiert ist.

## Claims

1. A cleaning device (30.1, 30.2) for cleaning at least one item of protective clothing,
wherein the cleaning device (30.1, 30.2) comprises
- at least one cleaning booth (31.1, 31.2),
- at least one cleaning unit (32.1, 32.2, 33.1, 33.2),
- at least one pollutant sensor (34.1, 34.2, 35.1, 35.2) and
- a control unit (81),
wherein the or each cleaning booth (31.1, 31.2) is designed to receive at least one item of protective clothing to be decontaminated, preferably simultaneously a plurality of items of protective clothing,
wherein the or each cleaning unit (32.1, 32.2, 33.1, 33.2)
- is associated with a cleaning booth (31.1, 31.2) in each case and
- is designed to carry out at least one cleaning process (S4, S6) for decontaminating at least one item of protective clothing received in the cleaning booth (31.1, 31.2),
wherein the or each pollutant sensor (34.1, 34.2, 35.1, 35.2)
- is associated with a cleaning booth (31.1, 31.2) in each case and
- is designed to detect in each case at least one pollutant (31.1, 31.2) on an item of protective clothing received in the associated cleaning booth (31.1, 31.2),
**characterized in that**
the control unit (81) is designed to automatically, depending on at least one signal [Sig_{CO}(t₁), Sig_{CO}(t₂), Sig_{CO}(t₃), Sig_{HCN}(t₁), Sig_{HCN}(t₂), Sig_{HCN}(t₃)] from the or at least one pollutant sensor (34.1, 34.2, 35.1, 35.2),
- trigger a cleaning process (S4, S6) by the cleaning unit (32.1, 32.2, 33.1, 33.2) or
- decide not to trigger a cleaning process, and preferably output a corresponding message, and
wherein the control unit (81) is designed to automatically trigger an initial cleaning process (S4) and,
depending on an initial signal [Sig_{CO}(t₁), Sig_{HCN}(t₁)] from the or at least one pollutant sensor (34.1, 34.2, 35.1, 35.2) that is generated after the initial cleaning process (S4),
- trigger a further cleaning process (S6) by the cleaning unit (32.1, 32.2, 33.1, 33.2) or
- decide not to trigger a further cleaning process, and preferably output a corresponding message, and
wherein the cleaning device (30.1, 30.2) is designed such that
- the cleaning unit (32.1, 32.2, 33.1, 33.2) carries out an initial cleaning process (S4) for decontaminating the or each item of protective clothing,
- the pollutant sensor (34.1, 34.2, 35.1, 35.2), after the initial cleaning process (S4), carries out a measurement on at least one pollutant on the or at least one item of protective clothing while the item of protective clothing is located in the cleaning booth (31.1, 31.2), and
- when the or at least one item of protective clothing in the cleaning booth (31.1, 31.2) is still contaminated, the cleaning unit (32.1, 32.2, 33.1, 33.2) carries out a further cleaning process (S6) for decontaminating the or at least one item of protective clothing.

2. The cleaning device (30.1, 30.2) according to claim 1,
**characterized in that**
the control unit (81) is designed to automatically, after the further cleaning process (S6),
depending on the initial signal [Sig_{CO}(t₁), Sig_{HCN}(t₁)] and a further signal [Sig_{CO}(t₂), Sig_{HCN}(t₂)] from the pollutant sensor (34.1, 34.2, 35.1, 35.2) that is generated after the further cleaning process (S6),
decide whether or not an item of protective clothing received in the cleaning booth (31.1, 31.2) is still contaminated.

3. The cleaning device (30.1, 30.2) according to either of the preceding claims,
**characterized in that**
the controller (81) is designed to
automatically, depending on a signal [Sig_{CO}(t₁), Sig_{HCN}(t₁)] from the pollutant sensor (34.1, 34.2, 35.1, 35.2), decide (E1?)
whether or not decontamination of at least one item of protective clothing received in the cleaning booth (31.1, 31.2) is necessary, and
- if decontamination is necessary, trigger a cleaning process (S4) and
- if decontamination is not necessary, output a corresponding message.

4. The cleaning device (30.1, 30.2) according to any of the preceding claims,
**characterized in that**
the cleaning device (30.1, 30.2) comprises an adjustment element for the or at least one pollutant sensor (34.1, 34.2, 35.1, 35.2),
Wherein the adjustment element is designed to move the pollutant sensor (34.1, 34.2, 35.1, 35.2) relative to the surface of an item of protective clothing received in the cleaning booth (31.1, 31.2).

5. The cleaning device (30.1, 30.2) according to any of the preceding claims,
**characterized in that**
the controller (81) is designed to
automatically, depending on at least one signal [Sig_{CO}(t₁), Sig_{CO}(t₂), Sig_{CO}(t₃), Sig_{HCN}(t₁), Sig_{HCN}(t₂), Sig_{HCN}(t₃)] from the or at least one pollutant sensor (34.1, 34.2, 35.1, 35.2),
define a value for at least one operating parameter for the or a cleaning process (S4, S6) by the cleaning unit (32.1, 32.2, 33.1, 33.2) and
control the cleaning unit (31.1, 31.2) such that the cleaning unit (31.1, 31.2) carries out the cleaning process (S4, S6) according to the or each defined operating parameter value.

6. The cleaning device (30.1, 30.2) according to any of the preceding claims,
**characterized in that**
the cleaning device (30.1, 30.2) comprises at least one vertical ventilation apparatus (17.2, 17.4)
which is designed to move a gas, preferably fresh air, in a direction vertically or obliquely downwards,
preferably from a ceiling region to a floor region of the cleaning booth (31.1, 31.2).

7. A use of a cleaning device (30.1, 30.2) according to any of claims 1 to 6
for cleaning at least one item of protective clothing,
preferably for simultaneously cleaning a plurality of items of protective clothing.

8. A transportable container (10) comprising at least one cleaning device (30.1, 30.2) according to any of claims 1 to 6.

9. The transportable container (10) according to claim 8,
**characterized in that**
the transportable container (10) provides at least one decontamination path,
preferably two decontamination paths arranged in parallel and separated from one another,
wherein the or each provided decontamination path
- leads from a black area (21) to a white area (51.1, 51.2) and
- comprises the or a cleaning device (30.1, 30.1).

10. The transportable container (10) according to claim 9,
**characterized in that**
the cleaning device (30.1, 30.2) comprises at least one horizontal ventilation apparatus (16.1, 16.2),
wherein the or each horizontal ventilation apparatus (16.1, 16.2) is designed to move a gas, preferably fresh air, in a direction (R) opposite to the or a decontamination path.

11. The transportable container (10) according to any of claims 8 to 10, **characterized in that**
the cleaning device (30.1, 30.2) comprises
- an undressing region (20.1, 20.2), a shower region (40.1, 40.2) and/or a dressing region (50.1, 50.2), and
- at least one vertical ventilation apparatus (17.1, 17.2),
wherein the or each vertical ventilation apparatus (17.1, 17.3) is designed to,
in the undressing region (20.1, 20.2), shower region (40.1, 40.2) and/or in the dressing region (50.1, 50.2) in the or a decontamination path,
move a gas, preferably fresh air, in a vertical or oblique direction,
preferably from a ceiling region to a floor region of the undressing region (20.1, 20.2), the shower region (40.1, 40.2) and/or the dressing region (50.1, 50.2).

12. The transportable container (10) according to any of claims 8 to 11, **characterized in that**
the or each decontamination path comprises
- an undressing region (20.1, 20.2),
- the or a cleaning device (30.1, 30.2) according to any of claims 1 to 6,
- a shower region (40.1, 40.2) and
- a dressing region (50.1, 50.2),
which are arranged one behind the other in a decontamination sequence.

13. A use of a transportable container (10) according to any of claims 8 to 12 for cleaning at least one item of protective clothing,
preferably for simultaneously cleaning a plurality of items of protective clothing.

14. A method for decontaminating at least one item of protective clothing,
preferably for simultaneously decontaminating a plurality of items of protective clothing,
using a cleaning device (30.1, 30.2) which comprises
- at least one cleaning booth (31.1, 31.2),
- at least one cleaning unit (32.1, 32.2, 33.1, 33.2),
- at least one pollutant sensor (34.1, 34.2, 35.1, 35.2) and
- a control unit (81),
wherein each cleaning unit (32.1, 32.2, 33.1, 33.2) is associated with a cleaning booth (31.1, 31.2), and
**characterized in that**
the method comprises the steps whereby
- the or each item of protective clothing is brought into the or a cleaning booth (31.1, 31.2),
- the control unit (81) automatically triggers an initial cleaning process (S4) for decontaminating the or each item of protective clothing,
- the cleaning unit (32.1, 32.2, 33.1, 33.2) carries out the initial cleaning process (S4),
- the pollutant sensor (34.1, 34.2, 35.1, 35.2), after the initial cleaning process (S4), carries out a measurement on at least one pollutant on the or at least one item of protective clothing while the item of protective clothing is located in the cleaning booth (31.1, 31.2),
- the control unit (81) automatically, depending on a result of the measurement by the pollutant sensor (34.1, 34.2, 35.1, 35.2), decides (E2?) whether or not the or at least one item of protective clothing is still contaminated,
- when the or at least one item of protective clothing in the cleaning booth (31.1, 31.2) is still contaminated, the control device (81) automatically triggers a further cleaning process (S6) for decontaminating the or at least one item of protective clothing,
- the cleaning unit (32.1, 32.2, 33.1, 33.2) carries out the further cleaning process (S6) and
- preferably when the or each item of protective clothing in the cleaning booth (31.1, 31.2) is no longer contaminated or a predefined termination criterion for terminating the cleaning is met, a corresponding message is output.

15. The method according to claim 14,
**characterized in that**
- the pollutant sensor (34.1, 34.2, 35.1, 35.2), before the initial cleaning process (S4), carries out an initial measurement on a pollutant on the item of protective clothing while the item of protective clothing is located in the cleaning booth (31.1, 31.2),
- the control unit (81) automatically, depending on a result of the initial measurement by the pollutant sensor (34.1, 34.2, 35.1, 35.2), decides (E1?) whether or not the item of protective clothing is contaminated, and
- the control unit (81) only triggers the initial cleaning process (S4) and the initial cleaning process (S4) is only carried out when the item of protective clothing is contaminated.

16. The method according to claim 14 or claim 15,
**characterized in that**
the pollutant sensor (34.1, 34.2, 35.1, 35.2), after the further cleaning process (S6), carries out a further measurement on the pollutant on the item of protective clothing while the item of protective clothing is located in the cleaning booth (31.1, 31.2),
and, depending on the result of the measurement and a result of the further measurement, which have been carried out by the pollutant sensor (34.1, 34.2, 35.1, 35.2),
the control unit (81) automatically decides (E3?) whether or not the or at least one item of protective clothing item is still contaminated, and
when the or at least one item of protective clothing is still contaminated,
- the control unit (81) triggers a third cleaning process and the third cleaning process is carried out or
- the control unit (81) automatically decides to terminate the cleaning and
a message is preferably output that the item of protective clothing is still contaminated.

## Revendications

1. Installation de nettoyage (30.1, 30.2) permettant de nettoyer au moins un vêtement de protection,
dans lequel l'installation de nettoyage (30.1, 30.2) comprend
- au moins une cabine de nettoyage (31.1, 31.2),
- au moins une unité de nettoyage (32.1, 32.2, 33.1, 33.2),
- au moins un capteur de substances nocives (34.1, 34.2, 35.1, 35.2) et
- un appareil de commande (81),
dans laquelle la cabine de nettoyage ou chaque cabine de nettoyage (31.1, 31.2) est conçue pour recevoir au moins un vêtement de protection à décontaminer, de préférence pour recevoir simultanément plusieurs vêtements de protection,
dans laquelle l'unité de nettoyage ou chaque unité de nettoyage (32.1, 32.2, 33.1, 33.2)
- est associée à respectivement une cabine de nettoyage (31.1, 31.2) et
- est configurée pour réaliser au moins un processus de nettoyage (S4, S6) permettant de décontaminer au moins un vêtement de protection reçu dans la cabine de nettoyage (31.1, 31.2),
dans laquelle le capteur de substances nocives ou chaque capteur de substances nocives (34.1, 34.2, 35.1, 35.2)
- est associé à respectivement une cabine de nettoyage (31.1, 31.2) et
- est configuré pour détecter respectivement au moins une substance nocive (31.1, 31.2) sur un vêtement de protection reçu dans la cabine de nettoyage (31.1, 31.2) associée,
**caractérisée en ce que**
l'appareil de commande (81) est configuré pour, automatiquement en fonction d'au moins un signal [Sig_{CO}(t₁), Sig_{CO}(t₂), Sig_{CO}(t₃), Sig_{HCN}(t₁), Sig_{HCN}(t₂), Sig_{HCN}(t₃)] du capteur de substances nocives ou d'au moins un capteur de substances nocives (34.1, 34.2, 35.1, 35.2),
- déclencher un processus de nettoyage (S4, S6) par l'unité de nettoyage (32.1, 32.2, 33.1, 33.2) ou
- décider de ne pas déclencher de processus de nettoyage et d'émettre de préférence un message correspondant, et
dans laquelle l'appareil de commande (81) est configuré pour déclencher automatiquement un processus de nettoyage initial (S4) et
en fonction d'un signal initial [Sig_{CO}(t₁), Sig_{HCN}(t₁)], généré après le processus de nettoyage initial (S4), du capteur de substances nocives ou d'au moins un capteur de substances nocives (34.1, 34.2, 35.1, 35.2)
- pour déclencher un autre processus de nettoyage (S6) par l'unité de nettoyage (32.1, 32.2, 33.1, 33.2) ou
- pour décider de ne pas déclencher un autre processus de nettoyage et d'émettre de préférence un message correspondant, et
dans laquelle l'installation de nettoyage (30.1, 30.2) est configurée de sorte que
- l'unité de nettoyage (32.1, 32.2, 33.1, 33.2) réalise un processus de nettoyage initial (S4) permettant de décontaminer le vêtement de protection ou chaque vêtement de protection,
- le capteur de substances nocives (34.1, 34.2, 35.1, 35.2) effectue, après le processus de nettoyage initial (S4), une mesure concernant au moins une substance nocive sur le vêtement de protection ou au moins un vêtement de protection tandis que le vêtement de protection se trouve dans la cabine de nettoyage (31.1, 31.2), et
- ensuite, lorsque le vêtement de protection ou au moins un vêtement de protection est encore contaminé dans la cabine de nettoyage (31.1, 31.2), l'unité de nettoyage (32.1, 32.2, 33.1, 33.2) réalise un autre processus de nettoyage (S6) permettant de décontaminer le vêtement de protection ou au moins un vêtement de protection.

2. Installation de nettoyage (30.1, 30.2) selon la revendication 1, **caractérisée en ce que**
l'appareil de commande (81) est configuré pour décider, automatiquement après l'autre processus de nettoyage (S6),
en fonction du signal initial [Sig_{CO}(t₁), Sig_{HCN}(t₁)] et d'un autre signal [Sig_{CO}(t₂), Sig_{HCN}(t₂)], généré après l'autre processus de nettoyage (S6), du capteur de substances nocives (34.1, 34.2, 35.1, 35.2),
si un vêtement de protection reçu dans la cabine de nettoyage (31.1, 31.2) est encore contaminé ou non.

3. Installation de nettoyage (30.1, 30.2) selon l'une des revendications précédentes,
**caractérisée en ce que**
l'appareil de commande (81) est configuré
pour décider (E1?), automatiquement en fonction d'un signal [Sig_{CO}(t₁), Sig_{HCN}(t₁)] du capteur de substances nocives (34.1, 34.2, 35.1, 35.2),
si une décontamination d'au moins un vêtement de protection reçu dans la cabine de nettoyage (31.1, 31.2) est nécessaire ou non, et
- ensuite, si une décontamination est nécessaire, pour déclencher un processus de nettoyage (S4) et
- ensuite, si une décontamination n'est pas nécessaire, pour émettre un message correspondant.

4. Installation de nettoyage (30.1, 30.2) selon l'une des revendications précédentes,
**caractérisée en ce que**
l'installation de nettoyage (30.1, 30.2) comprend un organe de réglage pour le capteur de substances nocives ou au moins un capteur de substances nocives (34.1, 34.2, 35.1, 35.2),
dans laquelle l'organe de réglage est conçu pour déplacer le capteur de substances nocives (34.1, 34.2, 35.1, 35.2) par rapport à la surface d'un vêtement de protection reçu dans la cabine de nettoyage (31.1, 31.2).

5. Installation de nettoyage (30.1, 30.2) selon l'une des revendications précédentes,
**caractérisée en ce que**
l'appareil de commande (81) est configuré
pour, automatiquement en fonction d'au moins un signal [Sig_{CO}(t₁), Sig_{CO}(t₂), Sig_{CO}(t₃), Sig_{HCN}(t₁), Sig_{HCN}(t₂), Sig_{HCN}(t₃)] du capteur de substances nocives ou d'au moins un capteur de substances nocives (34.1, 34.2, 35.1, 35.2),
définir une valeur pour au moins un paramètre de fonctionnement pour le processus de nettoyage ou un processus de nettoyage (S4, S6) par l'unité de nettoyage (32.1, 32.2, 33.1, 33.2) et
commander l'unité de nettoyage (31.1, 31.2) de sorte que l'unité de nettoyage (31.1, 31.2) réalise le processus de nettoyage (S4, S6) conformément à la valeur de paramètre de fonctionnement définie ou à chaque valeur de paramètre de fonctionnement définie.

6. Installation de nettoyage (30.1, 30.2) selon l'une des revendications précédentes,
**caractérisée en ce que**
l'installation de nettoyage (30.1, 30.2) comprend au moins un dispositif d'aération verticale (17.2, 17.4),
lequel est conçu pour déplacer un gaz, de préférence de l'air frais, dans une direction verticale ou oblique vers le bas,
de préférence d'une zone de plafond vers une zone de sol de la cabine de nettoyage (31.1, 31.2).

7. Utilisation d'une installation de nettoyage (30.1, 30.2) selon l'une des revendications 1 à 6
pour le nettoyage d'au moins un vêtement de protection,
de préférence pour le nettoyage simultané de plusieurs vêtements de protection.

8. Conteneur transportable (10) comportant au moins une installation de nettoyage (30.1, 30.2) selon l'une des revendications 1 à 6.

9. Conteneur transportable (10) selon la revendication 8,
**caractérisé en ce que**
le conteneur transportable (10) fournit au moins un trajet de décontamination,
de préférence deux trajets de décontamination disposés en parallèle et séparés l'un de l'autre,
dans lequel le trajet de décontamination fourni ou chaque trajet de décontamination fourni
- mène d'une zone noire (21) à une zone blanche (51.1, 51.2) et
- comprend l'installation de nettoyage ou respectivement une installation de nettoyage (30.1, 30.1).

10. Conteneur transportable (10) selon la revendication 9,
**caractérisé en ce que**
l'installation de nettoyage (30.1, 30.2) comprend au moins un dispositif d'aération horizontale (16.1, 16.2),
dans lequel le dispositif d'aération horizontale ou chaque dispositif d'aération horizontale (16.1, 16.2) est conçu pour déplacer un gaz, de préférence de l'air frais, dans un sens (R) opposé au trajet de décontamination ou à respectivement un trajet de décontamination.

11. Conteneur transportable (10) selon l'une des revendications 8 à 10, **caractérisé en ce que**
l'installation de nettoyage (30.1, 30.2) comprend
- une zone de déshabillage (20.1, 20.2), une zone de douche (40.1, 40.2) et/ou une zone d'habillage (50.1, 50.2) ainsi que
- au moins un dispositif d'aération verticale (17.1, 17.2),
dans lequel le dispositif d'aération verticale ou chaque dispositif d'aération verticale (17.1, 17.3) est conçu
pour déplacer, dans la zone de déshabillage (20.1, 20.2), la zone de douche (40.1, 40.2) et/ou dans la zone d'habillage (50.1, 50.2) dans le trajet de décontamination ou un trajet de décontamination,
un gaz, de préférence de l'air frais, dans une direction verticale ou oblique,
de préférence d'une zone de plafond à une zone de sol de la zone de déshabillage (20.1, 20.2), de la zone de douche (40.1, 40.2) et/ou de la zone d'habillage (50.1, 50.2).

12. Conteneur transportable (10) selon l'une des revendications 8 à 11,
**caractérisé en ce que**
le trajet de décontamination ou chaque trajet de décontamination comprend respectivement
- une zone de déshabillage (20.1, 20.2),
- l'installation de nettoyage ou une installation de nettoyage (30.1, 30.2) selon l'une des revendications 1 à 6,
- une zone de douche (40.1, 40.2) et
- une zone d'habillage (50.1, 50.2),
lesquelles sont disposées les unes derrière les autres dans un ordre de décontamination.

13. Utilisation d'un conteneur transportable (10) selon l'une des revendications 8 à 12
pour le nettoyage d'au moins un vêtement de protection,
de préférence pour le nettoyage simultané de plusieurs vêtements de protection.

14. Procédé permettant de décontaminer au moins un vêtement de protection,
de préférence permettant de décontaminer simultanément plusieurs vêtements de protection,
à l'aide d'une installation de nettoyage (30.1, 30.2) qui comprend
- au moins une cabine de nettoyage (31.1, 31.2),
- au moins une unité de nettoyage (32.1, 32.2, 33.1, 33.2),
- au moins un capteur de substances nocives (34.1, 34.2, 35.1, 35.2) et
- un appareil de commande (81),
dans lequel chaque unité de nettoyage (32.1, 32.2, 33.1, 33.2) est associée à respectivement une cabine de nettoyage (31.1, 31.2) et
**caractérisé en ce que**
le procédé comprend les étapes selon lesquelles
- le vêtement de protection ou chaque vêtement de protection est amené dans la cabine de nettoyage ou une cabine de nettoyage (31.1, 31.2),
- l'appareil de commande (81) déclenche automatiquement un processus de nettoyage initial permettant de décontaminer le vêtement de protection ou chaque vêtement de protection (S4),
- l'unité de nettoyage (32.1, 32.2, 33.1, 33.2) réalise le processus de nettoyage initial (S4),
- le capteur de substances nocives (34.1, 34.2, 35.1, 35.2) effectue, après le processus de nettoyage initial (S4), une mesure concernant au moins une substance nocive sur le vêtement de protection ou au moins un vêtement de protection tandis que le vêtement de protection se trouve dans la cabine de nettoyage (31.1, 31.2),
- l'appareil de commande (81) décide (E2?), automatiquement en fonction d'un résultat de la mesure par le capteur de substances nocives (34.1, 34.2, 35.1, 35.2), si le vêtement de protection ou au moins un vêtement de protection est encore contaminé ou non,
- ensuite, si le vêtement de protection ou au moins un vêtement de protection est encore contaminé dans la cabine de nettoyage (31.1, 31.2), l'appareil de commande (81) déclenche automatiquement un autre processus de nettoyage (S6) permettant de décontaminer le vêtement de protection ou au moins un vêtement de protection,
- l'unité de nettoyage (32.1, 32.2, 33.1, 33.2) réalise l'autre processus de nettoyage (S6) et
- ensuite de préférence, si le vêtement de protection ou chaque vêtement de protection n'est plus contaminé dans la cabine de nettoyage (31.1, 31.2) ou un critère d'interruption prédéfini permettant d'interrompre le nettoyage est rempli, un message correspondant est émis.

15. Procédé selon la revendication 14,
**caractérisé en ce que**
- le capteur de substances nocives (34.1, 34.2, 35.1, 35.2) effectue une mesure initiale concernant une substance nocive sur le vêtement de protection avant le processus de nettoyage initial (S4) tandis que le vêtement de protection se trouve dans la cabine de nettoyage (31.1, 31.2),
- l'appareil de commande (81) décide (E1?), automatiquement en fonction d'un résultat de la mesure initiale par le capteur de substances nocives (34.1, 34.2, 35.1, 35.2), si le vêtement de protection est contaminé ou non, et
- l'appareil de commande (81) ne déclenche le processus de nettoyage initial (S4) et le processus de nettoyage initial (S4) n'est réalisé que si le vêtement de protection est contaminé.

16. Procédé selon la revendication 14 ou la revendication 15,
**caractérisé en ce que**
le capteur de substances nocives (34.1, 34.2, 35.1, 35.2) effectue une autre mesure concernant la substance nocive sur le vêtement de protection après l'autre processus de nettoyage (S6) tandis que le vêtement de protection se trouve dans la cabine de nettoyage (31.1, 31.2),
en fonction du résultat de la mesure et d'un résultat de l'autre mesure, lesquelles ont été réalisées par le capteur de substances nocives (34.1, 34.2, 35.1, 35.2),
l'appareil de commande (81) décide (E3?) automatiquement si le vêtement de protection ou au moins un vêtement de protection est encore contaminé ou non, et
ensuite, si le vêtement de protection ou au moins un vêtement de protection est encore contaminé,
- l'appareil de commande (81) déclenche un troisième processus de nettoyage et
le troisième processus de nettoyage est réalisé ou
- l'appareil de commande (81) décide automatiquement d'interrompre le nettoyage et
de préférence, un message indiquant que le vêtement de protection est encore contaminé est émis.
